(19) **Europäisches Patentamt / European Patent Office / Office européen des brevets**

(11) **EP 4 625 263 A1**

(12) **EUROPEAN PATENT APPLICATION**
published in accordance with Art. 153(4) EPC

(43) Date of publication:
**01.10.2025 Bulletin 2025/40**

(21) Application number: **22966478.4**

(22) Date of filing: **22.11.2022**

(51) International Patent Classification (IPC):
**G06N 10/00** (2022.01)

(52) Cooperative Patent Classification (CPC):
**G06N 10/00**

(86) International application number:
**PCT/JP2022/043233**

(87) International publication number:
**WO 2024/111068 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **MORITA, Mikio**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57) The number of gates in a quantum circuit is reduced.

An information processing apparatus (10) identifies a first gate element from a first quantum circuit (1) including a plurality of gate elements (1a to 1h) each corresponding to a single electron excitation operator or a double electron excitation operator. The first gate element is a gate element in which a second qubit to be operated has a predetermined relationship with a first qubit specified by an observable (2a, 2b, ...) to be calculated. Then, the information processing apparatus (10) generates a second quantum circuit (3a, 3b, ...) by deleting the identified first gate element from the first quantum circuit (1).

FIG. 1

**Description**

Technical Field

The embodiments discussed herein relate to an information processing program, an information processing method, and an information processing apparatus.

Background Art

In the field of quantum computers, noisy intermediate-scale quantum computers (NISQ) are expected to be put into practical use. NISQ refers to intermediate-scale quantum computers without an error correction function. One example of NISQ applications is the variational quantum eigensolver (VQE) calculation. VQE is a variational algorithm for finding the ground state of a quantum many-body system. The VQE is usable to perform quantum chemical calculations on NISQ computers, for example. Quantum chemical calculations are designed to obtain a molecular state and physical property information by solving the Schrödinger equation. At present, various studies are being conducted to advance the practical use of VQE-based calculations. The representation of a wave function, which is a main component of VQE, is called an ansatz.

As a quantum circuit that executes quantum computation in a quantum computer includes more quantum gates, more noise accumulates, which makes it more difficult to obtain a correct computation result. Therefore, various methods for reducing the number of quantum gates have been proposed.

For example, an analysis method of calculating the Green's function while suppressing the number of quantum gates needed for computation on a quantum computer has been proposed. In addition, an information processing apparatus has been proposed that causes a first quantum calculator to repeatedly calculate the quantum state of a system under a first calculation condition and causes a second quantum calculator to start calculation under a second calculation condition based on a first energy obtained during the repetitive calculations. Further, a method of synthesizing quantum circuits has also been proposed. Still further, a method for incremental generation of quantum circuits has been proposed. Regarding VQE, for example, a method has been proposed that reduces the number of operators and sets initial values for an ansatz by using classical calculations.

Citation List

Patent Literature

PTL 1: Japanese Laid-open Patent Publication No. 2021-068281
PTL 2: International Publication Pamphlet No. WO 2022/107298
PTL 3: U.S. Patent Application Publication No. 2019/0018912
PTL 4: U.S. Patent Application Publication No. 2020/0192993

Non-Patent Literature

NPTL 1: Mikio Morita, Norihiko Takahashi, Hirotaka Oshima, and Shintaro Sato, "Acceleration of High-Precision VQE Calculations Using Quantum Chemical Calculations on Classical Computers", Quantum Software (QS), Information Processing Society of Japan, March 17, 2022, Vol. 2022-QS-5, No. 19, pp. 1-8

Summary of Invention

Technical Problem

Various techniques for reducing the number of gates in a quantum circuit have been proposed, but a further reduction in the number of gates is desired in order to reduce the impact of noise.

In one aspect, the objective of the present disclosure is to reduce the number of gates in a quantum circuit.

Solution to Problem

One proposal is to provide an information processing program that causes a computer to perform the following process.

The computer identifies, from a first quantum circuit including a plurality of gate elements each corresponding to a single electron excitation operator or a double electron excitation operator, a first gate element in which a second qubit to be operated has a predetermined relationship with a first qubit specified by an observable to be calculated. Then, the computer generates a second quantum circuit by deleting the identified first gate element from the first quantum circuit.

Advantageous Effects of Invention

In one aspect, the number of gates in a quantum circuit is reduced.

The above and other objects, features and advantages of the present invention will become apparent from the following description taken in conjunction with the accompanying drawings which illustrate, by way of example, preferred embodiments of the invention.

Brief Description of Drawings

[FIG. 1] FIG. 1 illustrates an example of an information processing method according to a first embodiment.
[FIG. 2] FIG. 2 illustrates an example of a system configuration according to a second embodiment.
[FIG. 3] FIG. 3 illustrates an example of hardware of a classical computer.
[FIG. 4] FIG. 4 is a block diagram illustrating an example of functions of a classical computer for VQE-based quantum chemical calculations.
[FIG. 5] FIG. 5 illustrates an example of a VQE-based quantum chemical calculation.
[FIG. 6] FIG. 6 is a diagram for describing an ansatz circuit.
[FIG. 7] FIG. 7 illustrates an example of a quantum circuit including ansatz circuits corresponding respectively to observables.
[FIG. 8] FIG. 8 illustrates an example of an ansatz circuit using rotation gate elements.
[FIG. 9] FIG. 9 illustrates an example of a Givens rotation circuit.
[FIG. 10] FIG. 10 illustrates an example of a PX circuit.
[FIG. 11] FIG. 11 is a diagram for describing a first property condition.
[FIG. 12] FIG. 12 is a diagram for describing a third property condition.
[FIG. 13] FIG. 13 illustrates an example of a parameter update method accompanying an order swap of gate elements.
[FIG. 14] FIG. 14 is a flowchart illustrating an example procedure for a VQE calculation process.
[FIG. 15] FIG. 15 is a flowchart illustrating an example procedure for a quantum circuit generation process.
[FIG. 16] FIG. 16 illustrates an example of an ansatz circuit.
[FIG. 17] FIG. 17 illustrates an example of a calculation result according to a comparative example.
[FIG. 18] FIG. 18 is a first diagram illustrating an example of a proposed method.
[FIG. 19] FIG. 19 is a second diagram illustrating the example of the proposed method.
[FIG. 20] FIG. 20 is a third diagram illustrating the example of the proposed method.
[FIG. 21] FIG. 21 is a fourth diagram illustrating the example of the proposed method.
[FIG. 22] FIG. 22 illustrates an example of an ansatz circuit in which gate elements have been deleted with parameters fixed.
[FIG. 23] FIG. 23 illustrates a comparison result among ansatz circuits in terms of calculation accuracy and the number of gate elements.

Description of Embodiments

Hereinafter, embodiments will be described with reference to the drawings. A plurality of embodiments may be combined unless they exclude each other.

[First Embodiment]

A first embodiment provides an information processing method for reducing the number of gates in a quantum circuit according to an observable to be calculated. The observable is a physical quantity that is measurable in quantum mechanics.

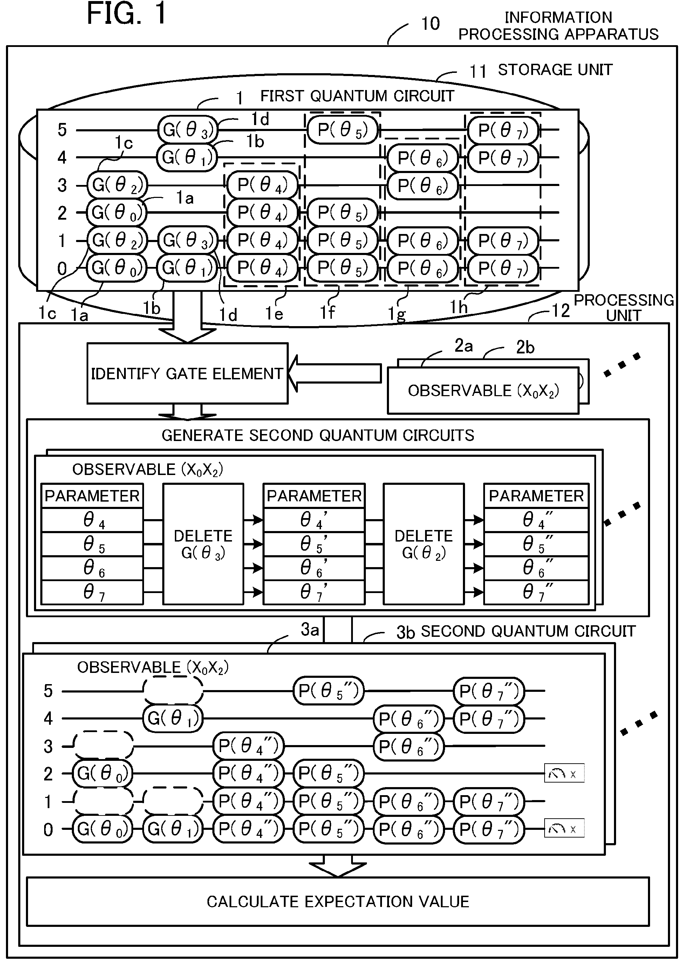

FIG. 1 illustrates an example of an information processing method according to the first embodiment. FIG. 1 illustrates an information processing apparatus 10 that implements the information processing method. The information processing apparatus 10 is able to implement the information processing method according to the first embodiment by executing, for example, a predetermined information processing program.

The information processing apparatus 10 includes a storage unit 11 and a processing unit 12 in order to implement the information processing method. The storage unit 11 is, for example, a memory or a storage device included in the information processing apparatus 10. The processing unit 12 is, for example, a processor or an arithmetic circuit included in the information processing apparatus 10.

The storage unit 11 stores, for example, a first quantum circuit 1. The first quantum circuit 1 defines a procedure of operating qubits in a quantum computer. The first quantum circuit 1 includes a plurality of gate elements 1a to 1h each corresponding to a single electron excitation operator or double electron excitation operator. Numbers on the left side of the first quantum circuit 1 indicate qubit numbers. Gate elements on the line on the right side of each qubit number are gate elements that perform operations on the qubit of the qubit number. The first quantum circuit 1 is, for example, an ansatz circuit used for a VQE calculation.

The processing unit 12 generates second quantum circuits 3a, 3b, ... for respective observables 2a, 2b, ... by reducing the number of gates in the first quantum circuit 1. For example, the processing unit 12 identifies, from the first quantum circuit 1, a first gate element in which a second qubit to be operated has a predetermined relationship with a first qubit specified by an observable 2a, 2b, ... to be calculated.

For example, the predetermined relationship is that, among the qubits to be operated by a gate element, the number of qubits that are also specified by an observable to be calculated is "0". Even if a gate element having the predetermined relationship with an observable to be calculated is deleted, this deletion has a small influence on the calculation result of the observable.

For example, the processing unit 12 compares the qubit numbers of first qubits with the qubit numbers of the second qubits to be operated by each of the plurality of gate elements 1a to 1h. Then, the processing unit 12 identifies, as a first gate element, a gate element in which the qubit numbers of the first qubits and the qubit numbers of the second qubits satisfy a predetermined conditional formula.

Consider now the case of calculating the observable 2a. To calculate the observable 2a, the measurement results in the X basis of the qubits with qubit number "0" and qubit number "2" are used. In this case, the processing unit 12 identifies, for example, the gate elements 1c and 1d in which the qubit numbers of the qubits to be operated do not include either "0" or "2" as the first gate elements.

The processing unit 12 generates the second quantum circuits 3a, 3b, ... by deleting identified first gate elements from the first quantum circuit 1. For example, the second quantum circuit 3a corresponding to the observable 2a is obtained by deleting the gate elements 1c and 1d from the first quantum circuit 1.

In generating each second quantum circuit 3a, 3b, ..., the processing unit 12 moves, for example, a first gate element to the end of the first quantum circuit, and deletes the first gate element that has reached the end from the first quantum circuit 1. At this time, the processing unit 12 repeatedly swaps the positions of the first gate element and the second gate element to be operated next to the first gate element in the first quantum circuit 1. When swapping the positions, the processing unit 12 updates a first parameter indicating the rotation angle of the first gate element and a second parameter indicating the rotation angle of the second gate element. When a plurality of first gate elements are identified, for example, the processing unit 12 moves the first gate elements to the end of the first quantum circuit 1 in order, starting with the first gate element having a later operation order than the other first gate elements in the first quantum circuit 1.

For example, when generating the second quantum circuit 3a corresponding to the observable 2a, the processing unit 12 moves the right gate element 1d of the identified gate elements 1c and 1d to the end of the first quantum circuit 1. At this time, the processing unit 12 repeats the position swap of the gate element 1d and each gate element 1e to 1h located on the right of the gate element 1d. When swapping the positions, the processing unit 12 updates the values of the parameters of the gate elements 1e to 1h whose positions are swapped, from "$\theta_4\,\theta_5$, $\theta_6$, and $\theta_7$" to "$\theta 4'\,\theta_5'$, $\theta_6'$, and $\theta_7'$". Then, the processing unit 12 deletes the gate element 1d from the first quantum circuit 1.

Next, the processing unit 12 moves the gate element 1c to the end of the first quantum circuit 1. At this time, the processing unit 12 repeats the position swap of the gate element 1c and each gate element 1e to 1h which operates the same qubit as the gate element 1c and is located on the right of the gate element 1c. When swapping the positions, the processing unit 12 updates the values of the parameters of the gate elements 1e to 1h whose positions are swapped, from "$\theta_4'$, $\theta_5'$, $\theta_6'$, and $\theta_7'$" to "$\theta_4\,\theta_5''$, $\theta_6''$, and $\theta_7''$". Then, the processing unit 12 deletes the gate element 1c from the first quantum circuit 1. As a result, the second quantum circuit 3a, which is obtained by deleting the two gate elements 1c and 1d from the first quantum circuit 1, is generated.

In the same manner as described above, the second quantum circuits 3b, ... are generated respectively for the other observables 2b, .... Thereafter, the processing unit 12 calculates the expectation value of each observable 2a, 2b, ... based on the measurement results of the states of the first qubits after the plurality of qubits are operated using the corresponding second quantum circuit 3a, 3b, ....

As described above, when each of the plurality of observables 2a, 2b, ... is calculated using the first quantum circuit 1, the corresponding second quantum circuit 3a, 3b, ... in which the number of gates has been reduced according to the observable is generated for the observable. Then, the plurality of observables 2a, 2b, ... are calculated using their corresponding second quantum circuits 3a, 3b, .... Since the second quantum circuits 3a, 3b, ... each have a fewer number of gates than the first quantum circuit 1, the processing unit 12 is able to reduce the impact of noise in the calculation of the observables.

In deleting a gate element, the processing unit 12 updates the values of the parameters indicating the rotation angles of the gate elements located on the right of the gate element to be deleted in the first quantum circuit 1. This reduces errors caused by the deletion of the gate element.

More specifically, when swapping the positions of a first gate element and a second gate element to be operated next to the first gate element, the processing unit 12 updates the parameters of the first gate element and the second gate element. This makes it possible to appropriately update the parameters.

In the case where a plurality of gate elements are found removable, the processing unit 12 deletes these gate elements in order, starting with the one having the later operation order (further to the right in the first quantum circuit 1). This makes it possible to reduce the number of parameter updates accompanying the deletion of the gate elements as much as possible, thereby reducing errors caused by the deletion of the gate elements.

Since the observables are calculated with less noise, for example, the processing unit 12 is able to perform a VQE calculation easily. In this case, the processing unit 12 sets an ansatz circuit representing a wave function in the VQE calculation as the first quantum circuit 1. Further, the processing unit 12 identifies one or more first gate elements for each of the observables 2a, 2b, ... whose expectation values are to be calculated in the VQE calculation. The processing unit 12 generates the second quantum circuits 3a, 3b, ... corresponding respectively to the observables 2a, 2b, .... Then, the processing unit 12 calculates the expectation values of the observables 2a, 2b, ... using their corresponding second quantum circuits 3a, 3b, .... After that, the processing unit 12 calculates, for example, the minimum value of the Hamiltonian in the VQE calculation on the basis of the expectation values of the observables 2a, 2b, .... In this manner, the VQE calculation with less noise is achieved.

[Second Embodiment]

The second embodiment provides a computer system capable of reducing the number of gates in an ansatz while maintaining sufficient calculation accuracy when performing a VQE-based quantum chemical calculation using a quantum computer.

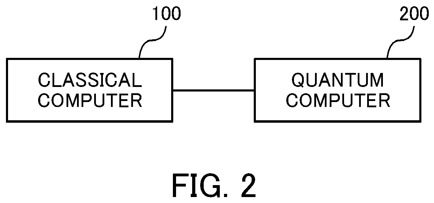

FIG. 2 illustrates an example of a system configuration according to the second embodiment. In the second embodiment, a classical computer 100 and a quantum computer 200 are connected to each other. The classical computer 100 is a von Neumann computer and performs processes such as the generation of a quantum circuit and the optimization of parameters used in calculations by the quantum circuit. The quantum computer 200 is a computer that performs quantum chemical calculations by performing operations based on quantum gates on qubits. The quantum computer 200 performs quantum chemical calculation using a VQE algorithm with the quantum circuit and the parameters generated by the classical computer 100.

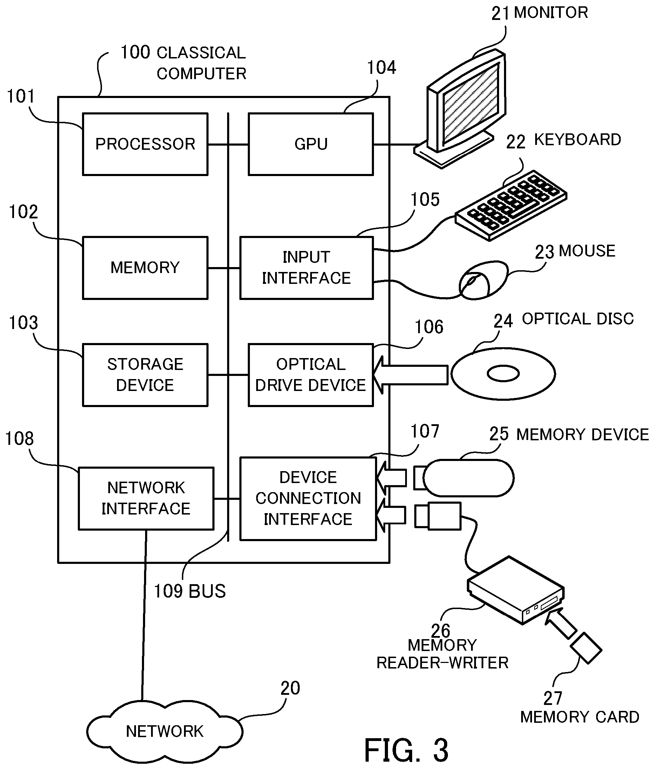

FIG. 3 illustrates an example of hardware of the classical computer. The entire classical computer 100 is controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of the functions implemented by the processor 101 executing the program may be implemented by an electronic circuit such as an application specific integrated circuit (ASIC) or a programmable logic device (PLD).

The memory 102 is used as a main memory device of the classical computer 100. The memory 102 temporarily stores at least part of an operating system (OS) program and application programs to be executed by the processor 101. The memory 102 also stores various data used for processing by the processor 101. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in recording medium. The storage device 103 is used as an auxiliary storage device of the classical computer 100. The storage device 103 stores the OS program, application programs, and various data. As the storage device 103, for example, a hard disk drive (HDD) or a solid state drive (SSD) may be used.

The GPU 104 is an arithmetic device that performs image processing, and is also called a graphic controller. A monitor 21 is connected to the GPU 104. The GPU 104 displays images on the screen of the monitor 21 in accordance with commands from the processor 101. Examples of the monitor 21 include organic electro luminescence (EL) display devices and liquid crystal display devices.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Examples of other pointing devices include touch panels, tablets, touch pads, and track balls.

The optical drive device 106 reads data from an optical disc 24 or writes data on the optical disc 24 using laser light or the like. The optical disc 24 is a portable recording medium on which data is recorded so as to be readable with reflection of light. The optical disc 24 may be a digital versatile disc (DVD), a DVD-RAM, a compact disc-read only memory (CD-ROM), a compact disc-recordable (CD-R), a compact disc-rewritable (CD-RW), or another.

The device connection interface 107 is a communication interface for connecting peripheral devices to the classical computer 100. For example, a memory device 25 and a memory reader-writer 26 are connected to the device connection interface 107. The memory device 25 is a recording medium having a function of communicating with the device connection interface 107. The memory reader-writer 26 is a device that writes data to a memory card 27 or reads data from the memory card 27. The memory card 27 is a card-type recording medium.

The network interface 108 is connected to a network 20. The network interface 108 communicates data with another computer such as a quantum computer or a communication device via the network 20. For example, the network interface 108 is a wired communication interface that is connected to a wired communication device such as a switch or a router via a cable. Further, the network interface 108 may be a wireless communication interface that is communicatively connected to a wireless communication device such as a base station or an access point by radio waves.

The classical computer 100 is able to implement the processing functions of the second embodiment with the hardware as described above. The information processing apparatus 10 described in the first embodiment may also be implemented by hardware similar to that of the classical computer 100 illustrated in FIG. 3.

The classical computer 100 implements the processing functions of the second embodiment by executing a program recorded on a computer-readable recording medium, for example. The program describing the processing contents to be executed by the classical computer 100 is recorded on various recording media. For example, the program to be executed by the classical computer 100 may be stored in the storage device 103. The processor 101 loads at least part of the program from the storage device 103 into the memory 102 and executes the program. The program to be executed by the classical computer 100 may be recorded on a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and execute the program.

The classical computer 100 having the hardware illustrated in FIG. 3 is able to perform VQE-based quantum chemical calculations in cooperation with the quantum computer 200.

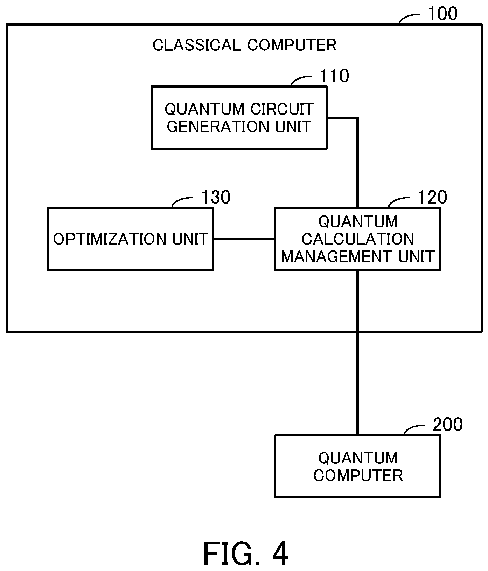

FIG. 4 is a block diagram illustrating an example of functions of the classical computer for VQE-based quantum chemical calculations. The classical computer 100 includes a quantum circuit generation unit 110, a quantum calculation management unit 120, and an optimization unit 130.

The quantum circuit generation unit 110 generates a quantum circuit for calculating the energy of a quantum many-body system such as a molecule. For example, the quantum circuit generation unit 110 generates a quantum circuit based on a VQE algorithm so that the quantum circuit induces electronic excitations for an ansatz with fewer quantum operations. The quantum circuit generation unit 110 transmits the generated quantum circuit to the quantum calculation management unit 120.

The quantum calculation management unit 120 instructs the quantum computer 200 to calculate observables based on the generated quantum circuit. For example, the quantum calculation management unit 120 sets a plurality of parameters $\theta$ related to the gate operations of the quantum gates in the quantum circuit. The quantum calculation management unit 120 sets the values of the plurality of parameters $\theta$ to initial values before the first execution of the quantum calculation. The quantum calculation management unit 120 receives, from the quantum computer 200, the calculation results of the observables based on the quantum circuit parameterized by the plurality of parameters $\theta$. Upon receiving the calculation results of the observables, the quantum calculation management unit 120 calculates the energy (Hamiltonian) based on the received observables, and determines whether the energy has converged. If the energy has not converged, the quantum calculation management unit 120 instructs the optimization unit 130 to optimize the parameters.

For each execution of the quantum calculation, the optimization unit 130 updates some or all values of the plurality of parameters $\theta$ in a direction that decreases the energy value. Then, when the optimization is complete, the optimization unit 130 notifies the quantum calculation management unit 120 of the updated values of the plurality of parameters $\theta$.

The function of each element in the classical computer 100 illustrated in FIG. 4 is implemented by a computer executing a program module corresponding to the element, for example.

Next, a method of calculating the ground-state energy of a molecule using VQE will be described.

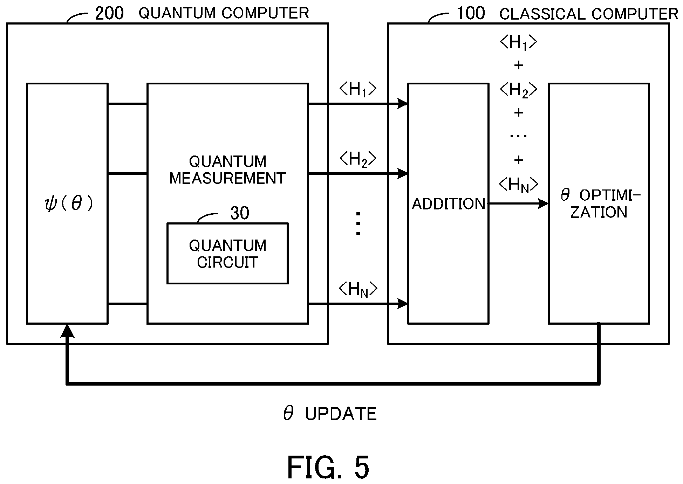

FIG. 5 illustrates an example of a VQE-based quantum chemical calculation. In a VQE-based quantum chemical calculation, the quantum computer 200 performs quantum measurement based on the initial values of parameters $\theta$ (a set of variables corresponding to electron excitations in a circuit). That is, the quantum computer 200 calculates the values of a plurality of decomposed Hamiltonians ($H_1$, $H_2$, ..., $H_N$) according to a quantum circuit. A quantum circuit 30 used for the quantum measurement includes an ansatz circuit. The plurality of calculated Hamiltonians are added by the classical computer 100, thereby obtaining an expectation value of the energy of the entire system. Then, the optimization unit 130 in the classical computer 100 optimizes the parameters $\theta$ based on the expectation value of the energy. That is, the optimization unit 130 updates the parameters $\theta$ in a direction that decreases the expectation value of the energy. When the parameters $\theta$ are updated, the quantum computer 200 calculates the Hamiltonians based on the updated parameters $\theta$ again.

The calculation of the Hamiltonians and the update of the parameters $\theta$ are iterated until the ground-state energy is obtained.

The energy E to be obtained in the calculation of the ground-state energy of the molecule by VQE is expressed by the following Formula (1).

$$E = \langle H \rangle = \frac{\langle \varphi(\vec{\theta}) | H | \varphi(\vec{\theta}) \rangle}{\varphi(\vec{\theta}) | \varphi(\vec{\theta})} \qquad (1)$$

$\varphi$ denotes a quantum state. H denotes a Hamiltonian. The Hamiltonian is a function of the intermolecular distance R. $\theta$ denotes a rotation angle used as an optimization variable. The ground-state energy is the lowest energy. Therefore, the lowest energy among the energies obtained by iteratively calculating Formula (1) a plurality of times while changing the rotation angle $\theta$ is taken as the ground-state energy $E_0$. The ground-state energy $E_0$ is expressed by the following Formula (2).

$$\frac{\langle \varphi(\vec{\theta}) | H | \varphi(\vec{\theta}) \rangle}{\varphi(\vec{\theta}) | \varphi(\vec{\theta})} \geq E_0 \qquad (2)$$

In the actual calculation, the Hamiltonian is decomposed into a sum form ($H = H_1 + H_2 + ...$), and each decomposed Hamiltonian is calculated. That is, the quantum circuit generation unit 110 generates a quantum circuit for performing the VQE-based quantum chemical calculation for each decomposed Hamiltonian.

A quantum circuit that represents a VQE includes a circuit called an ansatz. The ansatz accounts for the majority of the VQE quantum circuit. The ansatz is a circuit that is used to represent a wave function $\psi(\theta)$ parameterized by variables in a quantum circuit.

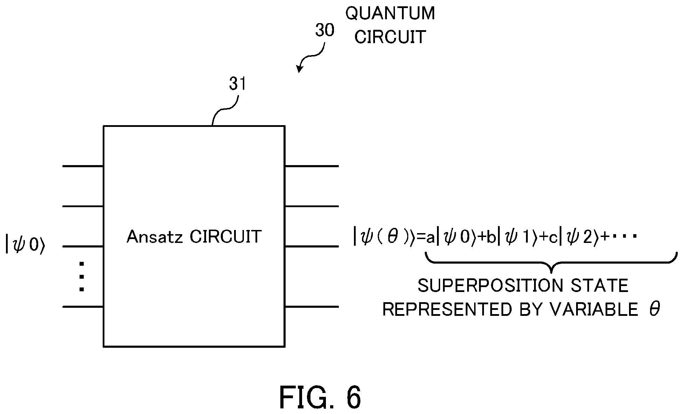

FIG. 6 is a diagram for describing an ansatz circuit. The wave function represented by an ansatz circuit 31 included in the quantum circuit 30 is in a superposition state expressed by a variable $\theta$. The superposition state is expressed as the following Formula (3).

$$|\psi(\Theta)\rangle = a|\psi 0\rangle + b|\psi 1\rangle + c|\psi 2\rangle + \ldots \qquad (3)$$

Each term on the right-hand side of Formula (3) corresponds to an electron excitation for obtaining a predetermined electron orbital. a, b, and c are coefficients respectively for the electron excitations. The quantum circuit 30 includes a basis change circuit, a Z-axis measurement circuit, and others in addition to the ansatz circuit 31.

Unitary coupled-cluster singles and doubles (UCCSD) is a representative ansatz for achieving high accuracy. Under an ideal condition (where hardware errors are sufficiently small), the UCCSD is able to obtain calculation results with higher accuracy than coupled-cluster singles and doubles (CCSD) in classical quantum chemical calculations. However, the UCCSD needs tens of thousands to hundreds of thousands of gates even for a problem involving about 20 qubits, and therefore the implementation of the UCCSD on NISQ computers is impractical.

The quantum circuit generation unit 110 generates a quantum circuit that implements a VQE, by representing a single or double electron excitation using a rotation gate element (Givens rotation circuit, pair exchange (PX) circuit). This achieves calculation accuracy equivalent to that of UCCSD while reducing the number of gates. Furthermore, the quantum circuit generation unit 110 is also able to reduce the number of gate operations for an ansatz using rotation gate elements by applying the technique described in Non-Patent Literature 1. However, even with the technique described in Non-Patent Literature 1, about 700 two-qubit gates are needed for a problem involving 20 qubits. Therefore, a further reduction in the number of gates is still demanded.

To this end, for each observable whose expectation value is to be calculated, the quantum circuit generation unit 110 optimizes the corresponding quantum circuit in the quantum circuit 30 including the gates implementing single electron excitation operators and double electron excitation operators. By doing so, a quantum circuit with a reduced number of gates is generated for each observable. During this optimization, the quantum circuit generation unit 110 adjusts the parameters each to be applied to the single electron excitation operator or the double electron excitation operator according to predetermined rules. This adjustment mitigates a degradation in calculation accuracy caused by the reduction in the number of gates.

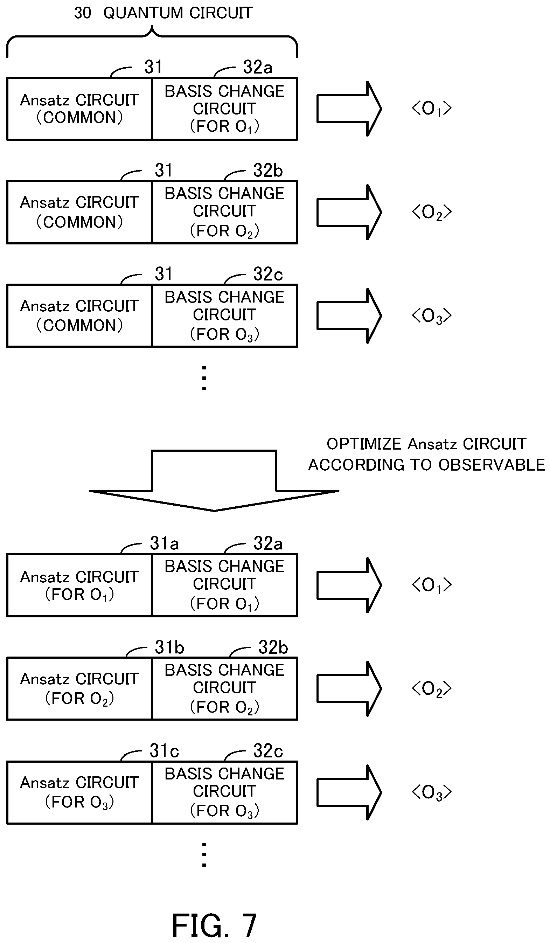

FIG. 7 illustrates an example of a quantum circuit including ansatz circuits corresponding respectively to observables. As the VQE quantum circuit 30, the quantum circuit generation unit 110 first generates a common ansatz circuit 31 and basis change circuits 32a, 32b, 32c, ... · for respective observables ($<O_1>$, $<O_2>$, $<O_3>$, ...). Each of the basis change circuits 32a, 32b, 32c, ... is a circuit that changes the states of qubits specified by a corresponding observable so as to enable measurement in the basis specified by the observable. For example, there is a case where the quantum computer 200 is able to perform measurement in the Z basis but is not able to perform measurement in the X basis. In this case, the classical computer 100 causes the quantum computer 200 to transform from the X basis to the Z basis with a basis change circuit and then to perform measurement in the Z basis. By doing so, the X-basis measurement is achieved.

The quantum circuit generation unit 110 optimizes the ansatz circuit 31 according to each observable to be calculated. In the optimization of the ansatz circuit 31, for example, an excitation operator having a small influence on the calculation result of the observable is deleted. As a result, different ansatz circuits 31a, 31b, 31c, ... are generated for the respective observables.

The ansatz circuit 31, which is optimized to the ansatz circuits 31a, 31b, 31c, ..., is implemented using rotation gate elements.

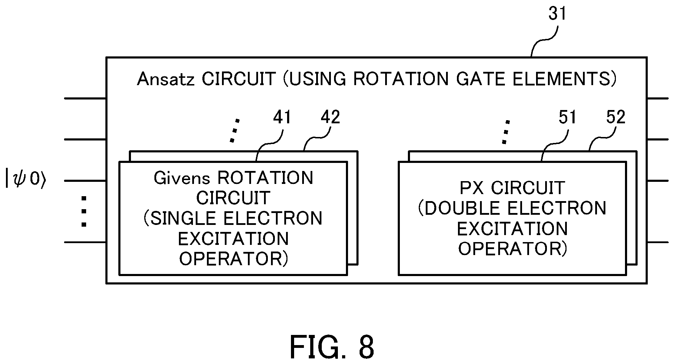

FIG. 8 illustrates an example of an ansatz circuit using rotation gate elements. The ansatz circuit 31 includes a plurality of Givens rotation circuits 41, 42, ... and a plurality of PX circuits 51, 52, ... Each of the Givens rotation circuits 41, 42, ... is an example of a single electron excitation operator. Each of the PX circuits 51, 52, ... is an example of a double electron excitation operator.

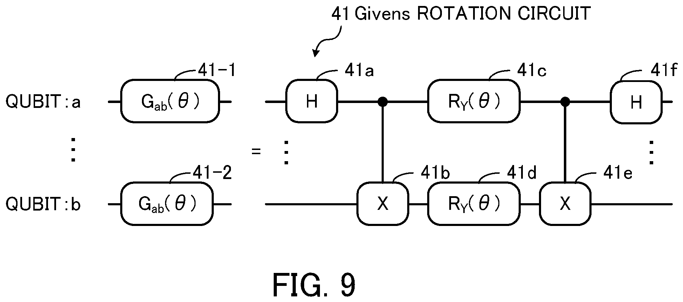

FIG. 9 illustrates an example of a Givens rotation circuit. The Givens rotation circuit 41 of FIG. 9 is a circuit that implements a single electron excitation with the a-th qubit as an excitation source and the b-th qubit as an excitation destination (a and b are integers of 0 or more). In the Givens rotation circuit 41 illustrated in FIG. 9, two circuit elements 41-1 and 41-2 forming the Givens rotation circuit 41 are placed on horizontal lines corresponding to the qubits to be subjected to the single electron excitation. The circuit elements 41-1 and 41-2 representing the one Givens rotation circuit 41 are expressed as "$G_{ab}(\theta)$", where $\theta$ denotes a rotation angle.

The Givens rotation circuit 41 is represented using one-qubit gates and two-qubit gates. First, a Hadamard gate 41a is placed on the excitation source qubit. Next, a CNOT gate 41b having the excitation source as the control qubit and the excitation destination as the target qubit is placed. Next, rotation gates 41c and 41d at the rotation angle $\theta$ around the Y axis are placed on the excitation source qubit and the excitation destination qubit, respectively. Next, a CNOT gate 41e having the excitation source as the control qubit and the excitation destination as the target qubit is placed. Finally, a Hadamard gate 41f is placed on the excitation source qubit.

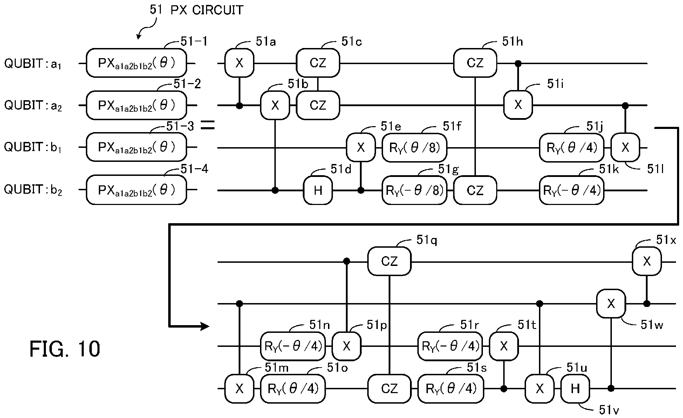

FIG. 10 illustrates an example of a PX circuit. The PX circuit 51 performs operations on two qubits representing an excitation source orbital and two qubits representing an excitation destination orbital. The PX circuit 51 illustrated in FIG. 10 is an example of a double electron excitation in which the $a_1$-th and $a_2$-th qubits are excitation sources and the $b_1$-th and $b_2$-th qubits are excitation destinations ($a_1$, $a_2$, $b_1$, and $b_2$ are integers of 0 or more). Four circuit elements 51-1 to 51-4 forming the PX circuit 51 are placed on horizontal lines corresponding to the qubits to be subjected to the double electron excitation.

The circuit element 51-1 corresponding to the $a_1$-th qubit serving as the excitation source is expressed as "$PX_{a1a2b1b2}(\theta)$", where $\theta$ denotes a rotation angle. The circuit element 51-2 corresponding to the $a_2$-th qubit serving as the excitation source is expressed as "$PX_{a1a2b1b2}(\theta)$". The circuit element 51-3 corresponding to the $b_1$-th qubit serving the excitation destination is expressed as "$PX_{a1a2b1b2}(\theta)$". The circuit element 51-4 corresponding to the $b_2$-th qubit serving as the excitation destination is expressed as "$PX_{a1a2b1b2}(\theta)$".

The PX circuit 51 is represented using one-qubit gates and two-qubit gates. First, a CNOT gate 51a having the $a_2$-th qubit as the control qubit and the $a_1$-th qubit as the target qubit is placed. Next, a CNOT gate 51b having the $b_2$-th qubit as the control qubit and the $a_2$-th qubit as the target qubit is placed. Next, a CZ gate 51c is placed on the $a_1$-th qubit and the $a_2$-th qubit, and a Hadamard gate 51d is placed on the $b_2$-th qubit. Next, a CNOT gate 51e having the $b_2$-th qubit as the control qubit and the $b_1$-th qubit as the target qubit is placed. Next, a rotation gate 51f at a rotation angle $\theta/8$ around the Y axis is placed on the $b_1$-th qubit, and a rotation gate 51g at a rotation angle $-\theta/8$ around the Y axis is placed on the $b_2$-th qubit.

Next, a CZ gate 51h is placed on the $a_1$-th qubit and the $b_2$-th qubit. Next, a CNOT gate 51i having the $a_1$-th qubit as the control qubit and the $a_2$-th qubit as the target qubit is placed. Next, a rotation gate 51j at a rotation angle $\theta/4$ around the Y axis is placed on the $b_1$-th qubit, and a rotation gate 51k at a rotation angle $-\theta/4$ around the Y axis is placed on the $b_2$-th qubit. Next, a CNOT gate 511 having the $a_2$-th qubit as the control qubit and the $b_1$-th qubit as the target qubit is placed.

Next, a CNOT gate 51m having the $a_2$-th qubit as the control qubit and the $b_2$-th qubit as the target qubit is placed. Next, a rotation gate 51n at a rotation angle $-\theta/4$ around the Y axis is placed on the $b_1$-th qubit, and a rotation gate 51o at a rotation angle $\theta/4$ around the Y axis is placed on the $b_2$-th qubit. Next, a CNOT gate 51p having the $a_1$-th qubit as the control

qubit and the $b_1$-th qubit as the target qubit is placed. Next, a CZ gate 51q is placed on the $a_1$-th qubit and the $b_2$-th qubit. Next, a rotation gate 51r at a rotation angle $-\theta/4$ around the Y axis is placed on the $b_1$-th qubit, and a rotation gate 51s at a rotation angle $\theta/4$ around the Y axis is placed on the $b_2$-th qubit.

Next, a CNOT gate 51t having the $b_2$-th qubit as the control qubit and the $b_1$-th qubit as the target qubit is placed. Next, a CNOT gate 51u having the $a_2$-th qubit as the control qubit and the $b_2$-th qubit as the target qubit is placed. Next, a Hadamard gate 51v is placed on the $b_2$-th qubit. Next, a CNOT gate 51w having the $b_2$-th qubit as the control qubit and the $a_2$-th qubit as the target qubit is placed. Next, a CNOT gate 51x having the $a_2$-th qubit as the control qubit and the $a_1$-th qubit as the target qubit is placed.

The quantum circuit generation unit 110 deletes some rotation elements (Givens rotation circuit or PX circuit) from the ansatz circuit 31 illustrated in FIGS. 8 to 10. For example, the quantum circuit generation unit 110 deletes, from a quantum circuit, an excitation operator that does not perform gate operations on any of the qubits corresponding to the Pauli operators specified by an observable. That is, the expectation value calculation of the VQE is implemented by measuring the states of the qubits corresponding to the Pauli operators specified by the observable. At this time, for example, in the case where an excitation operator does not use any of the qubits specified by the observable, the excitation operator has a small influence on the result of calculating the expectation value of the observable. Gate elements having a small influence on the observable in this way is removable from the quantum circuit.

Specifically, in the deletion of a single electron excitation gate element or a double electron excitation gate element, the properties defined by the following Formulas (4) to (7), which appear in the calculation of the expectation value of an observable, are used. In this connection, in Hamiltonian calculation formulas for quantum chemical calculations, the expressions on the right-hand sides of Formulas (4) to (7) frequently appear.

[First Property]

$$\langle\psi|A_k Z_{k+1}\ldots Z_{l-1}A_l|\psi\rangle \;=\; \langle\psi|G^\dagger_{pq}A_k Z_{k+1}\ldots Z_{l-1}A_l G_{pq}|\psi\rangle \qquad (4)$$

First property condition: $(k < p \wedge q < l) \vee (p < k \wedge 1 < q)$

[Second Property]

$$\langle\psi|A_k Z_{k+1}\ldots Z_{l-1}A_l|\psi\rangle \;=\; \langle\psi|P^\dagger_{pqrs}A_k Z_{k+1}\ldots Z_{l-1}A_l P_{pqrs}|\psi\rangle \qquad (5)$$

Second property condition: $(k < p, q \wedge r, s < l) \vee (p, q < k \wedge 1 < r, s)$

[Third Property]

$$\langle\psi|A_k Z_{k+1}\ldots Z_{l-1}A_l A_m Z_{m+1}\ldots Z_{n-1}A_n|\psi\rangle \;=\; \langle\psi|G^\dagger_{pq}A_k Z_{k+1}\ldots Z_{l-1}A_l A_m Z_{m+1}\ldots Z_{n-1}A_n G_{pq}|\psi\rangle$$

$$(6)$$

Third property condition: $(k < p < l \wedge m < q < n) \vee (( p < k \wedge l < p < m) \wedge (l < q < m \wedge n < q))$

[Fourth Property]

$\langle\psi|A_k Z_{k+1}\ldots Z_{l-1}A_l A_m Z_{m+1}\ldots Z_{n-1}A_n|\psi\rangle = \langle\psi|P^\dagger_{pqrs}I_k Z_{k+1}\ldots Z_{l-1}A_l A_m Z_{m+1}\ldots Z_{n-1}A_n P_{pqrs}|\psi\rangle$

Fourth property condition: $(k < p, q < l \wedge m < r, s < n) \vee (((p < k \wedge k < q < 1) \vee (k < p < l \wedge 1 < q < m)) \wedge ((1 < r < m \wedge m < s < n) \vee (m < r < n \wedge n < s))) \vee (((p, q < k \wedge (p < k \wedge 1 < q < m) \vee (1 < p, q < m)) \wedge (1 < r, s < m \wedge (1 < r < m \wedge n < s) \vee (n < r, s)))$

In Formulas (4) to (7), A is I (identity matrix) or a Pauli operator other than a Z operator ($A_k = I_k$ or $X_k$ or $Y_k$). Z is a Z operator of Pauli operators. Each of p, q, r, and s is an integer of 0 or more indicating the qubit number of a qubit to be operated by a rotation gate element ($p < q < r < s$). Each of k, 1, m, and n is an integer of 0 or more indicating the qubit number of a qubit to be measured by a Pauli operator included in an observable (k < 1 < m < n).

$G_{pq}$ is a matrix describing a Givens rotation for the p-th and q-th qubits. $P_{pqrs}$ is a matrix describing PX for the p-th, q-th, r-th, and s-th qubits.

The properties defined by Formulas (4) to (7) indicate that the expectation value of an observable does not change even if the Givens rotation or PX expressed by the right-hand side of each formula is deleted. Each property is established when the corresponding property condition is satisfied.

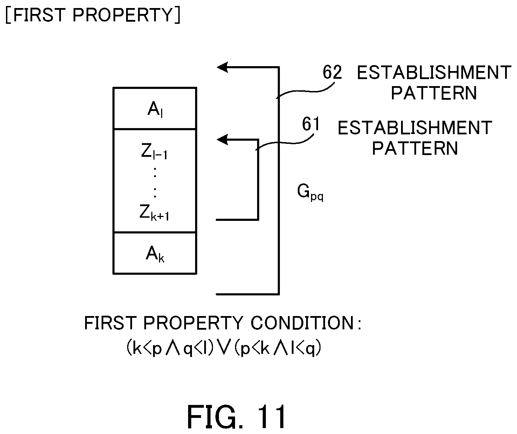

FIG. 11 is a diagram for describing the first property condition. The first property defined by Formula (4) is a property related to a Givens rotation in the case where an observable calculation formula has Pauli operators $(A_k, A_l)$ other than Z that sandwich consecutive Z operators $(Z_{k+1}, ..., Z_{1-1})$ therebetween.

According to the first property condition, the first property is established if at least either one of two establishment patterns 61 and 62 is satisfied. The establishment pattern 61 satisfies "k < p ∧ q < l" in the first property condition. The establishment pattern 62 satisfies "p < k ∧ 1 < q" in the first property condition.

In this way, if the two qubits (p, q) to be subjected to the Givens rotation are both sandwiched between the qubits (k, 1) to be operated by the Pauli operators $(A_k, A_l)$ other than Z specified by the observable, the first property is established (establishment pattern 61). In addition, if none of the two qubits (p, q) to be subjected to the Givens rotation is sandwiched between the qubits (k, 1) to be operated by the Pauli operators $(A_k, A_l)$ other than Z specified by the observable, the first property is also established (establishment pattern 62).

The second property defined by Formula (5) is a property related to PX in the case where an observable calculation formula has Pauli operators $(A_k, A_l)$ other than Z that sandwich consecutive Z operators $(Z_{k+1}, ..., Z_{1-1})$ therebetween.

According to the second property condition, the second property is established if all of the four qubits (p, q, r, s) to be subjected to the PX are sandwiched between the qubits (k, 1) to be operated by the Pauli operators $(A_k, A_l)$ other than Z specified by the observable. The second property is also satisfied if none of the four qubits (p, q, r, s) to be subjected to the PX is sandwiched between the qubits (k, 1) to be operated by the Pauli operators $(A_k, A_l)$ other than Z specified by the observable.

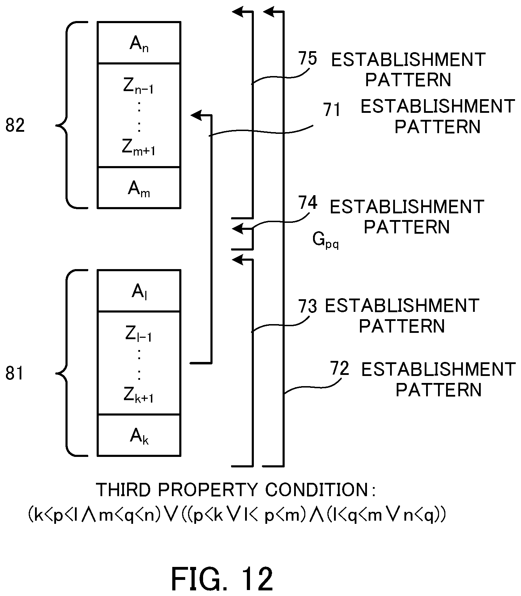

FIG. 12 is a diagram for describing the third property condition. The third property defined by Formula (6) is a property related to a Givens rotation in the case where the Pauli operators used for calculating an observable is divided into two groups 81 and 82. The first group 81 includes consecutive Z operators $(Z_{k+1}, ..., Z_{1-1})$ and Pauli operators $(A_k, A_l)$ other than Z that sandwich the Z operators therebetween. The second group 82 includes consecutive Z operators $(Z_{m+1}, ..., Z_{n-1})$ and Pauli operators $(A_m, A_n)$ other than Z that sandwich the Z operators therebetween.

According to the third property condition, the third property is established if at least any one of five establishment patterns 71 to 75 is satisfied. The establishment pattern 71 satisfies "k < p < l ∧ m < q < n" in the third property condition. The establishment patterns 72 to 75 satisfy "(p < k ∧ l < p < m) ∧ (1 < q < m ∨ n < q)" in the third property condition.

The establishment pattern 71 is a case where the first qubit to be subjected to the Givens rotation is included in the first group 81, which is the measurement target for the observable, and the second qubit is included in the second group 82, which is the measurement target for the observable.

The establishment patterns 72 to 75 are cases in which none of the two qubits to be subjected to the Givens rotation is included in the second group 82 that is the measurement target for the observable.

The establishment pattern 72 is a case where the two qubits to be subjected to the Givens rotation are not the qubits to be measured for the observable but have all the qubits to be measured for the observable sandwiched therebetween.

The establishment pattern 73 is a case where the two qubits to be subjected to the Givens rotation are not the qubits to be measured for the observable but have the qubits of the first group 81, which is the measurement target for the observable, sandwiched therebetween.

The establishment pattern 74 is a case where the two qubits to be subjected to the Givens rotation are not the qubits to be measured for the observable and do not have any qubit to be measured for the observable sandwiched therebetween.

The establishment pattern 75 is a case where the two qubits to be subjected to the Givens rotation are not the qubits to be measured for the observable but have the qubits of the second group 82, which is the measurement target for the observable, sandwiched therebetween.

The fourth property defined by Formula (7) is a property related to PX in the case where the Pauli operators used for calculating an observable are divided into two groups 81 and 82. "k < p, q < l ∧ m < r, s < n" in the fourth property condition is a case where two of the four qubits to be subjected to the PX are included in the first group 81, which is the measurement target for the observable, and the other two are included in the second group 82, which is the measurement target for the observable.

"(((p < k ∧ k < q < 1) ∨ (k < p < l ∧ 1 < q < m)) ∧ ((1 < r < m ∧ m < s < n) ∨ (m < r < n ∧ n < s)))" in the fourth property condition is a case where two of the four qubits to be subjected to the PX are included in the groups 81 and 82, respectively. At this time, the other two qubits are not included in either group 81 or 82.

"(((p, q < k V (p < k ∧ < q < m)) V (1 < p, q < m)) ∧ (1 < r, s < m V (1 < r < m ∧ n < s) V (n < r, s)))" in the fourth property condition is a case where none of the qubits to be subjected to the PX is included in the groups 81 and 82.

In the case where any one of the first to fourth properties is established, the gate element in the ansatz circuit 31 corresponding to the Givens rotation or PX expressed by the right-hand side of the established property is removable from the ansatz circuit 31. Therefore, the quantum circuit generation unit 110 detects gate elements each satisfying any of the first to fourth property conditions from the ansatz circuit 31, and deletes the detected gate elements.

In this connection, a gate element satisfying any of the first to fourth properties is deleted only when the gate element is located at the rightmost position (end) in the ansatz circuit. Therefore, in the case where the gate element to be deleted from the ansatz circuit 31 is not located at the end, the quantum circuit generation unit 110 moves the gate element to the end.

Moving the gate element to the rightmost position (end) in the quantum circuit is equivalent to moving the excitation operator to the left in the formula representing the operations performed by the quantum circuit. In the formula, each of the Givens rotation and PX is individually given a parameter θ indicating a rotation angle. Therefore, the Givens rotation is expressed as G(θ), and PX is expressed as P(θ).

When changing the order in which operators are caused to act, the quantum circuit generation unit 110 updates the values of parameters θ. For example, the swap of the operation order of gate elements in the VQE is expressed by Formulas (8) and (9).

$$|\psi\rangle = P_d(\theta_d)...P_c(\theta_c)...P_{b+1}(\theta_{b+1})G_b(\theta_b)...G_a(\theta_a)...G_1(\theta_1)|\psi_0\rangle = G_a(\theta_a')P_d(\theta_d')...P_c(\theta_c')...P_{b+1}(\theta_{b+1}')G_b(\theta_b')...G_1(\theta_1)|\psi_0\rangle \quad (8)$$

Formula (8) is a transformation formula in the case where the Givens rotation "$G_a(\theta_a)$" is a removable rotation operator and the operation order is changed so as to move the Givens rotation "$G_a(\theta_a)$" to the last. In a formula, gate elements corresponding to operators listed on the left are executed later in the operation order. By changing the operation order, the parameters "$\theta_a, \theta_6, \theta_c,$ and $\theta_d$" indicating the rotation angles of the reordered gate elements are changed to "$\theta_a'$, $\theta_b'$, $\theta_c'$, and $\theta_d'$", respectively. Since "$G_1(\theta_1)$" that is executed before "$G_a(\theta_a)$" to be moved is not influenced by the movement, its parameter is not changed.

Based on Formula (8), the calculation of the expectation value of the observable is expressed as Formula (9).

$$\langle\psi|\circ|\psi\rangle = \langle\psi_0|G_1(\theta_1)^\dagger...P_d(\theta_d')^\dagger G_a(\theta_a')^\dagger OG_a(\theta_a')P_d(\theta_d')...G_1(\theta_1)|\Psi_0\rangle = (\psi_0|G_1(\theta_1)^\dagger...P_d(\theta_d')^\dagger OP_d(\theta_d')...G_1(\theta_1)|\psi_0\rangle \quad (9)$$

In Formula (9), "∘" denotes a specific observable. In Formula (9), "$G_a(\theta_a')^\dagger$" and "$G_a(\theta_a')$" are present on both sides of the observable. In this case, the expectation value of the observable does not change even if "$G_a(\theta_a')^\dagger$" and "$G_a(\theta_a')$" are deleted. That is, "$G_a$" is removable.

As in the case of the Givens rotation, an operation order for PX is changeable and is expressed by Formula (10).

$$|\psi\rangle = P_d(\theta_d)...P_c(\theta_c)...P_{b+1}(\theta_{b+1})G_b(\theta_b)...G_a(\theta_a)...G_1(\theta_1)|\psi_0\rangle = P_c(\theta_c')P_d(\theta_d')...P_{b+1}(\theta_{b+1})G_b(\theta_b)...G_a(\theta_a)...G_1(\theta_1)|\psi_0\rangle \quad (10)$$

Formula (10) is a transformation formula in the case where the PX rotation "$P_c(\theta_c)$" is a removable rotation operator and the operation order is changed so as to move the PX rotation "$P_c(\theta_c)$" to the last. Based on Formula (10), the calculation of the expectation value of the observable is expressed as Formula (11).

$$\langle\psi|\circ|\psi\rangle = \langle\psi_0|G_1(\theta_1)^\dagger...P_d(\theta_d')^\dagger P_c(\theta_c')^\dagger OP_c(\theta_c')P_d(\theta_d')...G_1(\theta_1)|\psi_0\rangle = \langle\psi_0|G_1(\theta_1)^\dagger...P_d(\theta_d')^\dagger OP_d(\theta_d')...G_1(\theta_1)|\psi_0\rangle \quad (11)$$

In Formula (11), "$P_c(\theta_c')^\dagger$" and "$P_c(\theta_c')$" are present on both sides of the observable. In this case, the expectation value of the observable does not change even if "$P_c(\theta_c')^\dagger$" and "$P_c(\theta_c')$" are deleted. That is, "$P_c$" is removable.

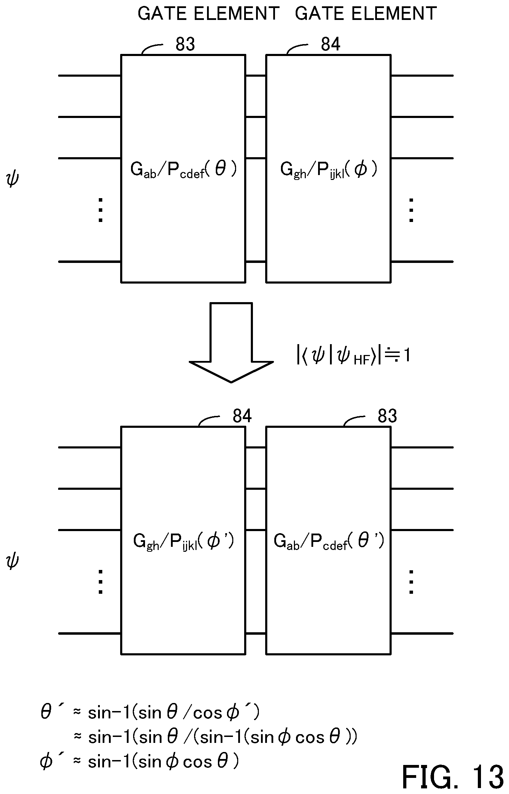

FIG. 13 illustrates an example of a parameter update method accompanying an order swap of gate elements. For example, it is assumed that two gate elements 83 and 84 each indicating a Givens rotation or PX are consecutive. A parameter indicating the rotation angle of the gate element 83 is taken as "θ", and a parameter indicating the rotation angle of the gate element 84 is taken as "φ". The value of the parameter of the gate element 83 after the swap of the operation order of the gate element 83 and the gate element 84 is taken as "θ'", and the value of the parameter of the gate element 84 after the swap is taken as "φ'".

Assuming that the absolute value of the inner product of the wave function $\psi$ and the Hartree-Fock state $\psi_{HF}$ is approximately 1 ($|\langle\psi|\psi_{HF}\rangle| \approx 1$), the parameters are calculated by the following Formulas (12) and (13).

$$\theta' \approx \sin-1(\sin\theta/\cos\varphi') \approx \sin-1(\sin\theta/(\sin-1(\sin\varphi\cos\theta))) \quad (12)$$

$$\varphi' \approx \sin-1(\sin\varphi\cos\theta) \quad (13)$$

The quantum circuit generation unit 110 updates the parameters according to Formulas (12) and (13) each time the orders of adjacent gate elements are swapped. By doing so, a removable gate element is moved to the rightmost position of the VQE. The Formulas (12) and (13) are approximate formulas, and an error increases as the deviation of "$|\langle\psi|\psi_{HF}\rangle|$" from "1" increases. Since "$|\langle\psi|\psi_{HF}\rangle| \approx 1$" in the VQE, the parameter updates based on the Formulas (12) and (13) make it possible to calculate the expectation value of the observable with a small error.

Next, a VQE calculation process using a quantum circuit with a reduced number of gates will be specifically described.

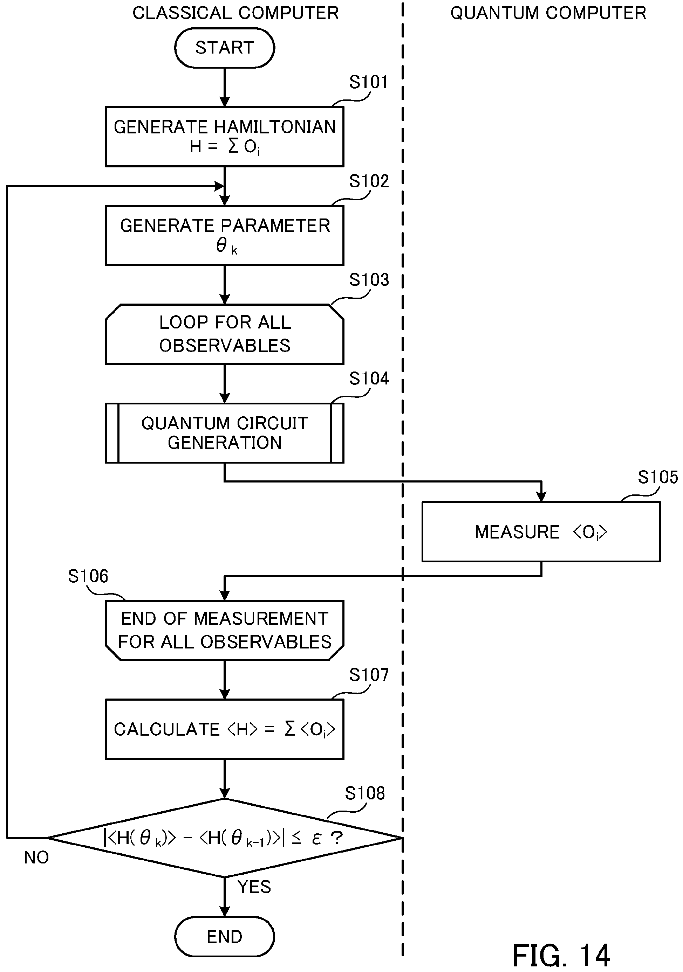

FIG. 14 is a flowchart illustrating an example procedure for the VQE calculation process. Hereinafter, the process illustrated in FIG. 14 will be described in order of step numbers.

[Step S101] The quantum calculation management unit 120 of the classical computer 100 generates a Hamiltonian "$H = \Sigma O_i$" corresponding to a problem to be solved. $O_i$ is the i-th observable (i is a natural number).

[Step S102] The optimization unit 130 generates a parameter $\theta_k$. For example, the optimization unit 130 updates the parameter $\theta_k$ from a preset initial value in a direction that decreases the value of the Hamiltonian each time steps S102 to S108 are repeated.

[Step S103] The classical computer 100 and the quantum computer 200 cooperatively execute steps S104 and S105 for all observables.

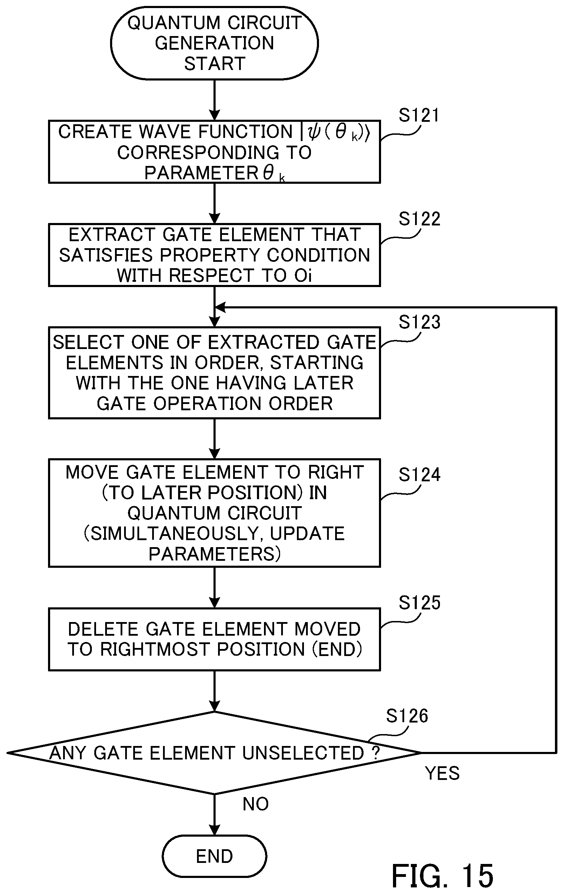

[Step S104] The quantum circuit generation unit 110 of the classical computer 100 performs a quantum circuit generation process according to each observable to be calculated. Details of the quantum circuit generation process will be described later (see FIG. 15).

[Step S105] The quantum calculation management unit 120 of the classical computer 100 instructs the quantum computer 200 to calculate each observable using a corresponding generated quantum circuit. The quantum computer 200 then operates qubits in accordance with the quantum circuit. Then, the quantum computer 200 measures the states of the qubits specified by the observable and calculates the observable. The quantum computer 200 transmits the calculation result of the observable to the classical computer 100.

[Step S106] When the calculation of all the observables is completed, the quantum calculation management unit 120 of the classical computer 100 advances the process to step S107.

[Step S107] The quantum calculation management unit 120 calculates the Hamiltonian based on the expectation values of the observables.

[Step S108] The quantum calculation management unit 120 determines whether the calculated Hamiltonian satisfies a completion condition of the VQE calculation. The completion condition is, for example, that the absolute value of the difference between the immediately previous calculation result ($<H(\theta_{k-1})>$) and the current calculation result ($<H(\theta k)>$) of the Hamiltonian is equal to or less than a predetermined value $\varepsilon$ ($|<H(\theta_k)> - <H(\theta_{k-1})>| \le \varepsilon$). If the completion condition is satisfied, the quantum calculation management unit 120 completes the VQE calculation. If the completion condition is not satisfied, the quantum calculation management unit 120 advances the process to step S102.

In this manner, the quantum circuit generation process is performed for each observable, and the expectation value of each observable is calculated using the quantum circuit optimized for the observable.

Next, the quantum circuit generation process will be described in detail.

FIG. 15 is a flowchart illustrating an example procedure for the quantum circuit generation process. Hereinafter, the process illustrated in FIG. 15 will be described in order of step numbers.

[Step S121] The quantum circuit generation unit 110 creates a wave function "$|\psi(\theta_k)\rangle$" corresponding to a parameter $\theta_k$.

[Step S122] The quantum circuit generation unit 110 extracts, from the ansatz circuit, a gate element that satisfies any one of the first to fourth property conditions defined by Formulas (4) to (7) with respect to the observable $O_i$. For example, the quantum circuit generation unit 110 determines whether each of the Givens rotation circuits and the PX circuits included in the ansatz circuit satisfies any of the first to fourth property conditions.

[Step S123] The quantum circuit generation unit 110 selects one of the extracted gate elements in order, starting with the one having the later gate operation order (further to the right in the quantum circuit).

[Step S124] The quantum circuit generation unit 110 moves the selected gate element to the right (to a later position) in the quantum circuit. At this time, the quantum circuit generation unit 110 also updates the parameters indicating the rotation angles of the selected gate element and another gate element whose positions have been swapped due to the movement of the selected gate element.

[Step S125] The quantum circuit generation unit 110 deletes the gate element moved to the rightmost position (end) of the quantum circuit from the quantum circuit.

[Step S126] The quantum circuit generation unit 110 determines whether the gate elements extracted in step S122 include any unselected gate element. If an unselected gate element is found, the quantum circuit generation unit 110 advances the process to step S123. If all the extracted gate elements have been selected, the quantum circuit generation unit 110 completes the quantum circuit generation process.

In this way, for each observable, gate elements that are found removable based on the qubits specified by the observable are deleted. As a result, the number of gate elements is reduced.

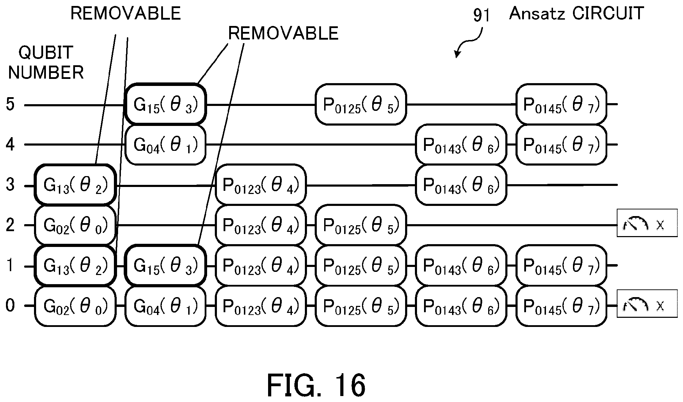

Hereinafter, an example of calculating an observable for a LiH six-qubit problem will be described with reference to FIGS. 16 to 23. When solving this problem, the classical computer 100 sets a predetermined coupling length and performs Jordan-Wigner transformation. Here, it is assumed that the classical computer 100 calculates an expectation value of "$X_0X_2$" among approximately 130 observables. FIG. 16 illustrates an ansatz circuit for this case.

FIG. 16 illustrates an example of an ansatz circuit. The ansatz circuit 91 performs gate operations on six qubits with qubit numbers "0" to "5". Among the six qubits, qubits with qubit numbers "0" and "2" are measured to calculate the expectation value of the observable "$X_0X_2$".

In the ansatz circuit 91, a Givens rotation circuit "$G_{13}(\theta_2)$" matches the establishment pattern 75 in the third property condition illustrated in FIG. 12. Therefore, the Givens rotation circuit "$G_{13}(\theta_2)$" is a removable gate element. Similarly, a Givens rotation circuit "$G_{15}(\theta_3)$" also matches the establishment pattern 75 in the third property condition illustrated in FIG. 12. Therefore, the Givens rotation circuit "$G_{15}(\theta_3)$" is also a removable gate element.

Here, as a comparative example, a result of performing a VQE calculation without deleting the removable gate elements will be described.

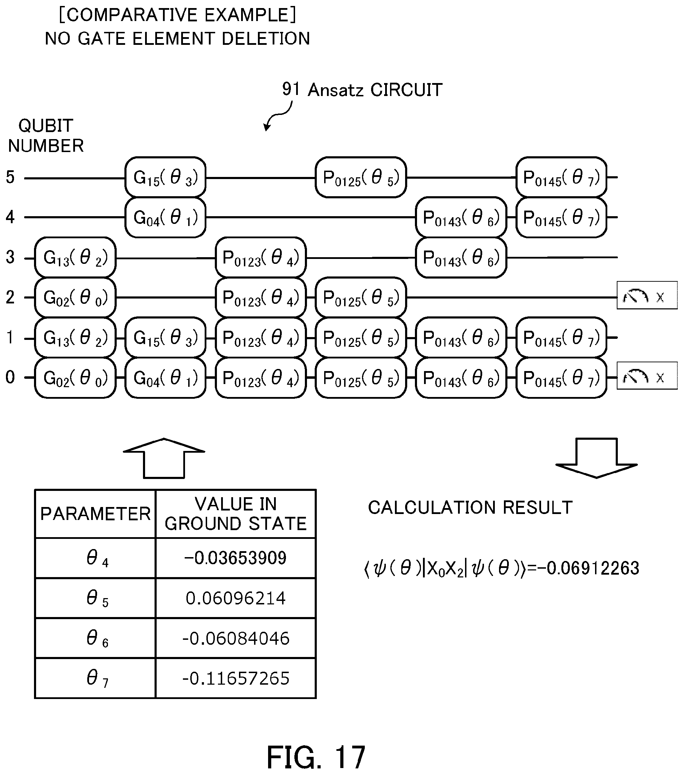

FIG. 17 illustrates an example of a calculation result according to the comparative example. When a VQE calculation is performed using the ansatz circuit 91 without deleting any gate element, the parameter $\theta_4$ in the ground state is "-0.03653909". The parameter $\theta_5$ in the ground state is "0.06096214". The parameter $\theta_6$ in the ground state is "-0.06084046". The parameter $\theta_7$ in the ground state is "-0.11657265". The calculation result of the expectation value of the observable "$X_0X_2$" in this case is "-0.06912263".

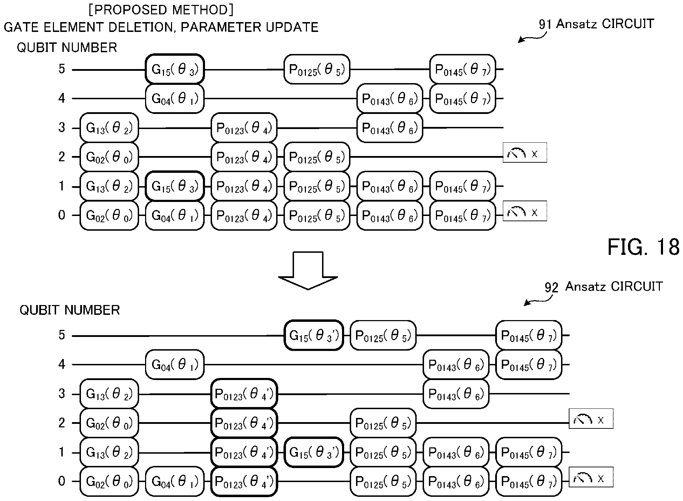

Next, with reference to FIGS. 18 to 21, a case (proposed method) in which removable gate elements are deleted and parameters are updated along with the movement of the gate elements will be described.

FIG. 18 is a first diagram illustrating an example of the proposed method. Gate elements that are removable from the ansatz circuit 91 in the case of the observable "$X_0X_2$" are the Givens rotation circuit "$G_{13}(\theta_2)$" and the Givens rotation circuit "$G_{15}(\theta_3)$". In this case, the Givens rotation circuit "$G_{15}(\theta_3)$" is located further to the right (later operation order) in the circuit than the Givens rotation circuit "$G_{13}(\theta_2)$". Therefore, the quantum circuit generation unit 110 first moves the Givens rotation circuit "$G_{15}(\theta_3)$" to the right.

The quantum circuit generation unit 110 swaps the positions of the Givens rotation circuit "$G_{15}(\theta_3)$" and the PX circuit "$P_{0123}(\theta_4)$". At this time, the quantum circuit generation unit 110 changes the parameters of the Givens rotation circuit "$G_{15}(\theta_3)$" and the PX circuit "$P_{0123}(\theta_4)$" according to Formulas (12) and (13). In the ansatz circuit 92 after the positions of the gate elements are swapped, the Givens rotation circuit "$G_{15}(\theta_3')$" is located on the right side of the PX circuit "$P_{0123}(\theta_4')$".

Thereafter, the quantum circuit generation unit 110 repeats the swap of the Givens rotation circuit "$G_{15}(\theta_3')$" and its adjacent gate element to the right. As a result, the Givens rotation circuit "$G_{15}(\theta_3')$" is finally moved to the end of the ansatz circuit.

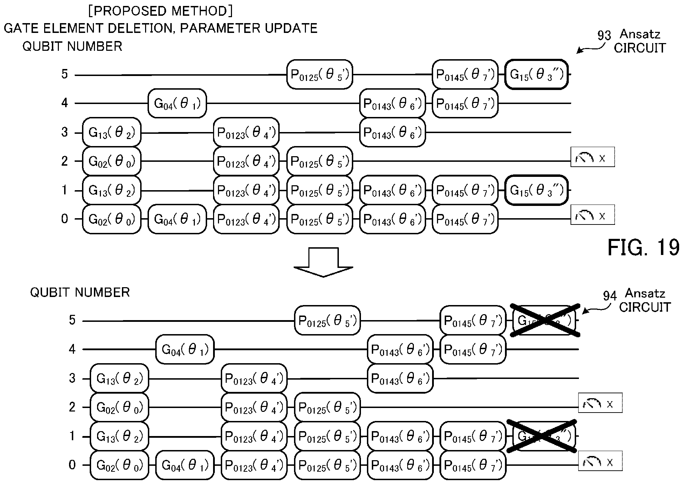

FIG. 19 is a second diagram illustrating the example of the proposed method. In an ansatz circuit 93 in which the Givens rotation circuit "$G_{15}(\theta_3')$" has moved to the end, the parameter of the Givens rotation circuit "$G_{15}(\theta_3')$" has been updated, resulting in a Givens rotation circuit "$G_{15}(\theta_3'')$". In addition, the position of the Givens rotation circuit "$G_{15}(\theta_3')$" is swapped with that of each of the PX circuits "$P_{0125}(\theta)_5)$", "$P_{0143}(\theta_6)$", and "$P_{0145}(\theta_7)$". When the positions are swapped, the parameters of the PX circuits "$P_{0125}(\theta_5)$", "$P_{0143}(\theta_6)$", and "$P_{0145}(\theta_7)$" are updated, resulting in PX circuits "$P_{0125}(\theta_5')$", "$P_{0143}(\theta_6')$", and "$P_{0145}(\theta_7')$".

The quantum circuit generation unit 110 deletes the Givens rotation circuit "$G_{15}(\theta_3'')$" moved to the end of the ansatz circuit 93. Since the Givens rotation circuit "$G_{15}(\theta_3'')$" is deleted, an ansatz circuit 94 with the reduced number of gates is generated.

Then, the quantum circuit generation unit 110 moves the Givens rotation circuit "$G_{13}(\theta_2)$" to the right while updating parameters. Then, the quantum circuit generation unit 110 deletes the Givens rotation circuit "$G_{13}(\theta_2)$" that has reached the end.

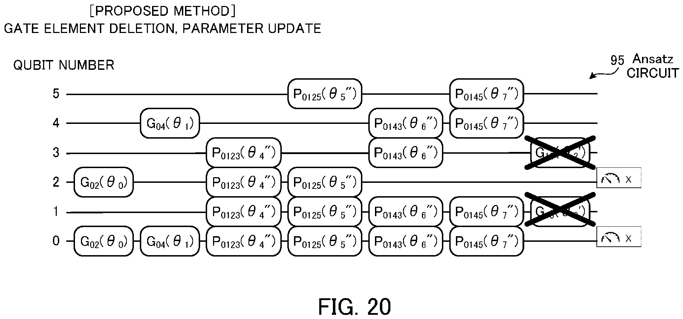

FIG. 20 is a third diagram illustrating the example of the proposed method. FIG. 20 illustrates an ansatz circuit 95 after the Givens rotation circuit "$G_{13}(\theta_2)$" is deleted. When the Givens rotation circuit "$G_{13}(\theta_2)$" is moved to the right, the position of the Givens rotation circuit "$G_{13}(\theta_2)$" is swapped with the position of each of the PX circuit "$P_{0123}(\theta_4')$", PX circuit "$P_{0125}(\theta_5')$", "$P_{0143}(\theta_6')$", and "$P_{0145}(\theta_7')$". When the positions are swapped, their parameters are updated, resulting in PX circuit "$P_{0123}(\theta_4'')$", PX circuit "$P_{0125}(\theta_5'')$", "$P_{0143}(\theta_6'')$", and "$P_{0145}(\theta_7'')$".

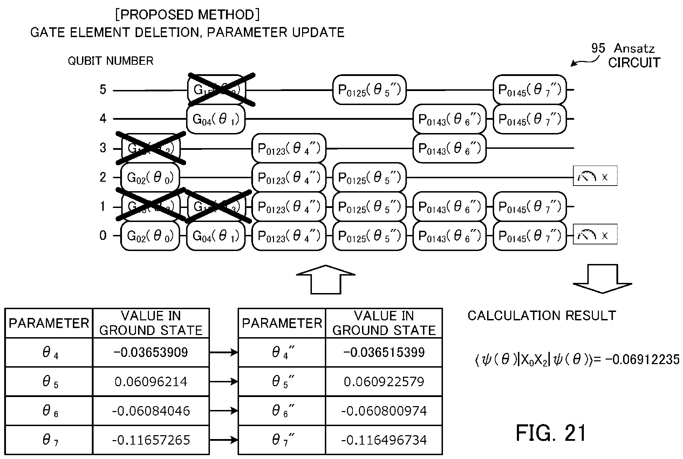

FIG. 21 is a fourth diagram illustrating the example of the proposed method. When a VQE calculation is performed using the ansatz circuit 95 in which the removable gate elements have been deleted, the parameter $\theta_4''$ in the

ground state is "-0.036515399". The parameter $\theta_5$ in the ground state is "0.060922579". The parameter $\theta_6$ in the ground state is "-0.060800974". The parameter $\theta_7$ in the ground state is "-0.116496734". The calculation result of the expectation value of the observable "$X_0X_2$" in this case is "-0.06912235".

The quantum circuit generation unit 110 may delete the removable gate elements without updating the parameters, as long as the degradation in the accuracy of the VQE calculation is acceptable.

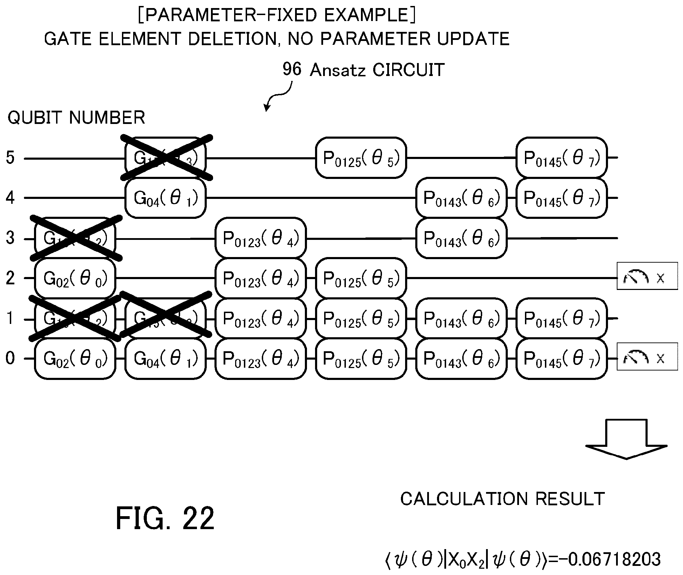

FIG. 22 illustrates an example of an ansatz circuit in which gate elements have been deleted with parameters fixed. An ansatz circuit 96 illustrated in FIG. 22 is obtained by deleting the removable Givens rotation circuit "$G_{13}(\theta_2)$" and the removable Givens rotation circuit "$G_{15}(\theta_3)$" from the ansatz circuit 91 (see FIG. 16). The parameters of the other gate elements have not been updated. The calculation result of the expectation value of the observable "$X_0X_2$" using the ansatz circuit 96 is "-0.06718203".

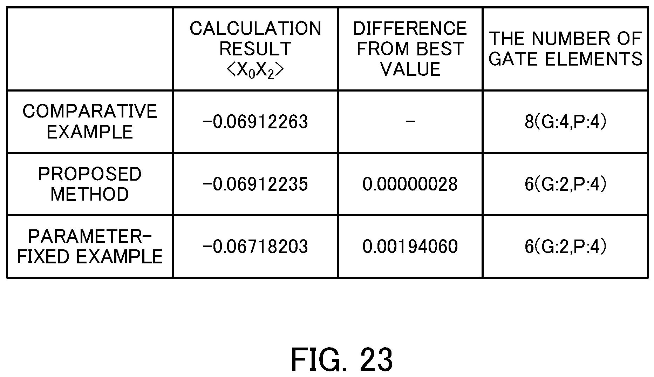

FIG. 23 illustrates a comparison result among ansatz circuits in terms of calculation accuracy and the number of gate elements. In FIG. 23, the ansatz circuit 91 illustrated in FIG. 17 is a comparative example, the ansatz circuit 95 illustrated in FIG. 21 is a proposed method, and the ansatz circuit 96 illustrated in FIG. 22 is a parameter-fixed example. The comparative example has the best value (the lowest value) of the calculation result of the observable "$X_0X_2$".

The proposed method has a higher calculation result than the comparative example, but the difference from the best value is "0.00000028". In addition, the number of gate elements in the comparative example is eight (four Givens rotation circuits and four PX circuits), whereas the number of gate elements in the proposed method is six (two Givens rotation circuits and four PX circuits). As described above, the proposed method is able to reduce the number of gate elements and yield a calculation result with a small difference from the best value.

In the parameter-fixed example, the number of gate elements is six (two Givens rotation circuits and four PX circuits) as in the proposed method. However, in the parameter-fixed example, the difference from the best value is "0.00194060", indicating a large reduction in accuracy compared to the proposed method.

[Other Embodiments]

The second embodiment describes an example in which the number of gates in an ansatz circuit for a VQE calculation is reduced. However, in a quantum circuit using single electron excitation operators or double electron excitation operators, the number of gates for each observable is reduced in the same manner.

Further, the second embodiment describes an example of using a Givens rotation circuit as a gate element corresponding to a single electron excitation operator. However, other circuits may be deleted in the same manner as the Givens rotation circuit.

Still further, the second embodiment describes an example of using a PX circuit as a gate element corresponding to a double electron excitation operator. However, other circuits may be deleted in the same manner as the PX circuit.

The foregoing merely illustrates the principles of the invention. Further, many modifications and variations are possible for those skilled in the art, and the present invention is not limited to the exact construction and application examples shown and described above, and all corresponding modifications and equivalents are deemed to be within the scope of the present invention as defined by the appended claims and their equivalents.

Reference Signs List

1 First quantum circuit
1a to 1h Gate element
2a, 2b, ... Observable
3a, 3b, ... Second quantum circuit
10 Information processing apparatus
11 Storage unit
12 Processing unit

**Claims**

**1.** An information processing program that causes a computer to perform a process comprising:

identifying, from a first quantum circuit including a plurality of gate elements each corresponding to a single electron excitation operator or a double electron excitation operator, a first gate element in which a second qubit to be operated has a predetermined relationship with a first qubit specified by an observable to be calculated; and

generating a second quantum circuit by deleting the identified first gate element from the first quantum circuit.

2. The information processing program according to claim 1, wherein the generating of the second quantum circuit includes moving the first gate element to an end of the first quantum circuit and deleting the first gate element having reached the end from the first quantum circuit.

3. The information processing program according to claim 2, wherein the generating of the second quantum circuit includes repeatedly swapping positions of the first gate element and a second gate element to be operated next to the first gate element in the first quantum circuit, and updating, in response to the swapping of the positions, a first parameter indicating a rotation angle of the first gate element and a second parameter indicating a rotation angle of the second gate element.

4. The information processing program according to claim 3, wherein
upon identifying a plurality of first gate elements including the first gate element, the generating of the second quantum circuit includes moving the plurality of first gate elements to the end of the first quantum circuit in order, starting with a first gate element having a later operation order than other first gate elements among the plurality of first gate elements in the first quantum circuit.

5. The information processing program according to claim 1, wherein the identifying of the first gate element includes comparing a qubit number of the first qubit with a qubit number of the second qubit to be operated by each of the plurality of gate elements, and identifying, as the first gate element, a gate element in which the qubit number of the first qubit and the qubit number of the second qubit satisfy a predetermined conditional formula.

6. The information processing program according to claim 1, wherein the predetermined relationship is that, among qubits to be operated by each of the plurality of gate elements, a number of qubits that are also specified by the observable to be calculated is "0".

7. The information processing program according to any one of claims 1 to 6, wherein the process further includes calculating an expectation value of the observable based on a result of measuring a state of the first qubit after a plurality of qubits to be operated in the second quantum circuit are operated according to the second quantum circuit.

8. The information processing program according to claim 7, wherein

the observable for which the expectation value is to be calculated in a variational quantum eigensolver (VQE) calculation is provided in plurality,
the identifying of the first gate element includes setting an ansatz circuit as the first quantum circuit, and identifying the first gate element for each of the plurality of observables, the ansatz circuit representing a wave function in the VQE calculation,
the generating of the second quantum circuit includes generating the second quantum circuit for each of the plurality of observables for which the expectation value is to be calculated in the VQE calculation, and
the calculating of the expectation value of the observable includes calculating, for each of the plurality of observables for which the expectation value is to be calculated in the VQE calculation, the expectation value of the observable using the second quantum circuit corresponding to said each of the plurality of observables.

9. An information processing method executed by a computer, the information processing method comprising:

identifying, from a first quantum circuit including a plurality of gate elements each corresponding to a single electron excitation operator or a double electron excitation operator, a first gate element in which a second qubit to be operated has a predetermined relationship with a first qubit specified by an observable to be calculated; and
generating a second quantum circuit by deleting the identified first gate element from the first quantum circuit.

10. An information processing apparatus comprising:
a processing unit configured to

identify, from a first quantum circuit including a plurality of gate elements each corresponding to a single electron excitation operator or a double electron excitation operator, a first gate element in which a second qubit to be operated has a predetermined relationship with a first qubit specified by an observable to be calculated; and
generate a second quantum circuit by deleting the identified first gate element from the first quantum circuit.

**FIG. 1**

10 INFORMATION PROCESSING APPARATUS

11 STORAGE UNIT

1 FIRST QUANTUM CIRCUIT

| | | | | | | |
|---|---|---|---|---|---|---|
| 5 | | $G(\theta_3)$ 1d | | $P(\theta_5)$ | | $P(\theta_7)$ |
| 4 | 1c | $G(\theta_1)$ 1b | | | $P(\theta_6)$ | $P(\theta_7)$ |
| 3 | $G(\theta_2)$ | 1a | $P(\theta_4)$ | | $P(\theta_6)$ | |
| 2 | $G(\theta_0)$ | | $P(\theta_4)$ | $P(\theta_5)$ | | |
| 1 | $G(\theta_2)$ | $G(\theta_3)$ | $P(\theta_4)$ | $P(\theta_5)$ | $P(\theta_6)$ | $P(\theta_7)$ |
| 0 | $G(\theta_0)$ | $G(\theta_1)$ | $P(\theta_4)$ | $P(\theta_5)$ | $P(\theta_6)$ | $P(\theta_7)$ |

1c 1a    1b    1d    1e    1f    1g    1h    12 PROCESSING UNIT

IDENTIFY GATE ELEMENT

2a  2b

OBSERVABLE $(X_0 X_2)$

GENERATE SECOND QUANTUM CIRCUITS

OBSERVABLE $(X_0 X_2)$

| PARAMETER | | PARAMETER | | PARAMETER |
|---|---|---|---|---|
| $\theta_4$ | | $\theta_4'$ | | $\theta_4''$ |
| $\theta_5$ | DELETE $G(\theta_3)$ | $\theta_5'$ | DELETE $G(\theta_2)$ | $\theta_5''$ |
| $\theta_6$ | | $\theta_6'$ | | $\theta_6''$ |
| $\theta_7$ | | $\theta_7'$ | | $\theta_7''$ |

3a    3b SECOND QUANTUM CIRCUIT

OBSERVABLE $(X_0 X_2)$

| | | | | | | |
|---|---|---|---|---|---|---|
| 5 | | | | $P(\theta_5'')$ | | $P(\theta_7'')$ |
| 4 | | $G(\theta_1)$ | | | $P(\theta_6'')$ | $P(\theta_7'')$ |
| 3 | | | $P(\theta_4'')$ | | $P(\theta_6'')$ | |
| 2 | $G(\theta_0)$ | | $P(\theta_4'')$ | $P(\theta_5'')$ | | |
| 1 | | | $P(\theta_4'')$ | $P(\theta_5'')$ | $P(\theta_6'')$ | $P(\theta_7'')$ |
| 0 | $G(\theta_0)$ | $G(\theta_1)$ | $P(\theta_4'')$ | $P(\theta_5'')$ | $P(\theta_6'')$ | $P(\theta_7'')$ |

CALCULATE EXPECTATION VALUE

FIG. 2

21 MONITOR

100 CLASSICAL COMPUTER

101

104

PROCESSOR | GPU

22 KEYBOARD

102

105

MEMORY | INPUT INTERFACE

23 MOUSE

103

106

24 OPTICAL DISC

STORAGE DEVICE | OPTICAL DRIVE DEVICE

108

107

25 MEMORY DEVICE

NETWORK INTERFACE | DEVICE CONNECTION INTERFACE

109 BUS

26 MEMORY READER-WRITER

27 MEMORY CARD

NETWORK

20

FIG. 3

FIG. 4

200 QUANTUM COMPUTER

$\psi(\theta)$

QUANTUM MEASUREMENT

30

QUANTUM CIRCUIT

$\langle H_1 \rangle$

$\langle H_2 \rangle$

$\langle H_N \rangle$

100 CLASSICAL COMPUTER

ADDITION

$\langle H_1 \rangle$
$+$
$\langle H_2 \rangle$
$+$
$\dots$
$+$
$\langle H_N \rangle$

$\theta$ OPTIMI-ZATION

$\theta$ UPDATE

FIG. 5

QUANTUM
30 CIRCUIT

31

$$|\psi 0\rangle$$

Ansatz CIRCUIT

$$|\psi(\theta)\rangle = a|\psi 0\rangle + b|\psi 1\rangle + c|\psi 2\rangle + \cdots$$

SUPERPOSITION STATE
REPRESENTED BY VARIABLE $\theta$

FIG. 6

30 QUANTUM CIRCUIT

| 31 | 32a | | |
|---|---|---|---|
| Ansatz CIRCUIT (COMMON) | BASIS CHANGE CIRCUIT (FOR $O_1$) | ⟹ | $\langle O_1 \rangle$ |

| 31 | 32b | | |
|---|---|---|---|
| Ansatz CIRCUIT (COMMON) | BASIS CHANGE CIRCUIT (FOR $O_2$) | ⟹ | $\langle O_2 \rangle$ |

| 31 | 32c | | |
|---|---|---|---|
| Ansatz CIRCUIT (COMMON) | BASIS CHANGE CIRCUIT (FOR $O_3$) | ⟹ | $\langle O_3 \rangle$ |

⋮

⟱ OPTIMIZE Ansatz CIRCUIT ACCORDING TO OBSERVABLE

| 31a | 32a | | |
|---|---|---|---|
| Ansatz CIRCUIT (FOR $O_1$) | BASIS CHANGE CIRCUIT (FOR $O_1$) | ⟹ | $\langle O_1 \rangle$ |

| 31b | 32b | | |
|---|---|---|---|
| Ansatz CIRCUIT (FOR $O_2$) | BASIS CHANGE CIRCUIT (FOR $O_2$) | ⟹ | $\langle O_2 \rangle$ |

| 31c | 32c | | |
|---|---|---|---|
| Ansatz CIRCUIT (FOR $O_3$) | BASIS CHANGE CIRCUIT (FOR $O_3$) | ⟹ | $\langle O_3 \rangle$ |

⋮

FIG. 7

31

Ansatz CIRCUIT (USING ROTATION GATE ELEMENTS)

41  42

$|\psi 0\rangle$

Givens ROTATION
CIRCUIT
(SINGLE ELECTRON
EXCITATION
OPERATOR)

51  52

PX CIRCUIT
(DOUBLE ELECTRON
EXCITATION
OPERATOR)

## FIG. 8

41 Givens ROTATION CIRCUIT

FIG. 9

FIG. 10

[FIRST PROPERTY]

$62$  ESTABLISHMENT PATTERN

$61$  ESTABLISHMENT PATTERN

$G_{pq}$

FIRST PROPERTY CONDITION:
$$(k < p \land q < l) \lor (p < k \land l < q)$$

# FIG. 11

THIRD PROPERTY CONDITION :
$$(k < p < l \wedge m < q < n) \vee ((p < k \vee l < p < m) \wedge (l < q < m \vee n < q))$$

FIG. 12

GATE ELEMENT   GATE ELEMENT

83                84

$G_{ab}/P_{cdef}(\theta)$        $G_{gh}/P_{ijkl}(\phi)$

$\psi$

$|\langle\psi|\psi_{HF}\rangle|\fallingdotseq 1$

84                83

$G_{gh}/P_{ijkl}(\phi')$        $G_{ab}/P_{cdef}(\theta')$

$\psi$

$\theta' \approx \sin-1(\sin\theta/\cos\phi')$
$\quad \approx \sin-1(\sin\theta/(\sin-1(\sin\phi\cos\theta)))$
$\phi' \approx \sin-1(\sin\phi\cos\theta)$

FIG. 13

CLASSICAL COMPUTER | QUANTUM COMPUTER

START

S101

GENERATE HAMILTONIAN
$H = \sum O_i$

S102

GENERATE PARAMETER
$\theta_k$

S103

LOOP FOR ALL
OBSERVABLES

S104

QUANTUM CIRCUIT
GENERATION

S105

MEASURE $\langle O_i \rangle$

S106

END OF MEASUREMENT
FOR ALL OBSERVABLES

S107

CALCULATE $\langle H \rangle = \sum \langle O_i \rangle$

S108

$|\langle H(\theta_k) \rangle - \langle H(\theta_{k-1}) \rangle| \leq \varepsilon$ ?

NO

YES

END

FIG. 14

```
           ┌─────────────────┐
           │ QUANTUM CIRCUIT │
           │  GENERATION     │
           │    START        │
           └─────────────────┘
                    │
                    ▼
        ┌──────────────────────────┐   S121
        │ CREATE WAVE FUNCTION |ψ(θk)⟩│
        │ CORRESPONDING TO         │
        │ PARAMETER θk             │
        └──────────────────────────┘
                    │
                    ▼
        ┌──────────────────────────┐   S122
        │ EXTRACT GATE ELEMENT THAT│
        │ SATISFIES PROPERTY CONDITION│
        │ WITH RESPECT TO Oi       │
        └──────────────────────────┘
                    │
                    ▼
        ┌──────────────────────────┐   S123
        │ SELECT ONE OF EXTRACTED GATE│
        │ ELEMENTS IN ORDER, STARTING│
        │ WITH THE ONE HAVING LATER│
        │ GATE OPERATION ORDER     │
        └──────────────────────────┘
                    │
                    ▼
        ┌──────────────────────────┐   S124
        │ MOVE GATE ELEMENT TO RIGHT│
        │ (TO LATER POSITION) IN   │
        │ QUANTUM CIRCUIT          │
        │ (SIMULTANEOUSLY, UPDATE  │
        │ PARAMETERS)              │
        └──────────────────────────┘
                    │
                    ▼
        ┌──────────────────────────┐   S125
        │ DELETE GATE ELEMENT MOVED│
        │ TO RIGHTMOST POSITION (END)│
        └──────────────────────────┘
                    │
                    ▼
        ◇──────────────────────────◇   S126
        │ ANY GATE ELEMENT UNSELECTED ?│──── YES
        ◇──────────────────────────◇
                    │ NO
                    ▼
             ┌──────────┐
             │   END    │
             └──────────┘
```

FIG. 15

REMOVABLE

REMOVABLE

QUBIT
NUMBER

91   Ansatz CIRCUIT

5 ——————— $G_{15}(\theta_3)$ ——— $P_{0125}(\theta_5)$ ——— $P_{0145}(\theta_7)$ —

4 ——————— $G_{04}(\theta_1)$ ————————— $P_{0143}(\theta_6)$ — $P_{0145}(\theta_7)$ —

3 — $G_{13}(\theta_2)$ ————— $P_{0123}(\theta_4)$ ——— $P_{0143}(\theta_6)$ ———————

2 — $G_{02}(\theta_0)$ ————— $P_{0123}(\theta_4)$ — $P_{0125}(\theta_5)$ ——————— ⟅ x

1 — $G_{13}(\theta_2)$ — $G_{15}(\theta_3)$ — $P_{0123}(\theta_4)$ — $P_{0125}(\theta_5)$ — $P_{0143}(\theta_6)$ — $P_{0145}(\theta_7)$ —

0 — $G_{02}(\theta_0)$ — $G_{04}(\theta_1)$ — $P_{0123}(\theta_4)$ — $P_{0125}(\theta_5)$ — $P_{0143}(\theta_6)$ — $P_{0145}(\theta_7)$ — ⟅ x

FIG. 16

[COMPARATIVE EXAMPLE]
NO GATE ELEMENT DELETION

91 Ansatz CIRCUIT

QUBIT
NUMBER

5 ———— $G_{15}(\theta_3)$ ———— $P_{0125}(\theta_5)$ ———— $P_{0145}(\theta_7)$ —

4 ———— $G_{04}(\theta_1)$ ———————— $P_{0143}(\theta_6)$ — $P_{0145}(\theta_7)$ —

3 — $G_{13}(\theta_2)$ ———— $P_{0123}(\theta_4)$ ———— $P_{0143}(\theta_6)$ ————————

2 — $G_{02}(\theta_0)$ ———— $P_{0123}(\theta_4)$ — $P_{0125}(\theta_5)$ ———————— ⌢ X

1 — $G_{13}(\theta_2)$ — $G_{15}(\theta_3)$ — $P_{0123}(\theta_4)$ — $P_{0125}(\theta_5)$ — $P_{0143}(\theta_6)$ — $P_{0145}(\theta_7)$ —

0 — $G_{02}(\theta_0)$ — $G_{04}(\theta_1)$ — $P_{0123}(\theta_4)$ — $P_{0125}(\theta_5)$ — $P_{0143}(\theta_6)$ — $P_{0145}(\theta_7)$ — ⌢ X

| PARAMETER | VALUE IN GROUND STATE |
|-----------|-----------------------|
| $\theta_4$ | -0.03653909 |
| $\theta_5$ | 0.06096214 |
| $\theta_6$ | -0.06084046 |
| $\theta_7$ | -0.11657265 |

CALCULATION RESULT

$\langle\psi(\theta)|X_0X_2|\psi(\theta)\rangle = -0.06912263$

FIG. 17

[PROPOSED METHOD]
GATE ELEMENT DELETION, PARAMETER UPDATE

91 Ansatz CIRCUIT

QUBIT NUMBER

5 ——— $G_{15}(\theta_3)$ ——— $P_{0125}(\theta_5)$ ——— $P_{0145}(\theta_7)$

4 ——— $G_{04}(\theta_1)$ ——— $P_{0143}(\theta_6)$ $P_{0145}(\theta_7)$

3 — $G_{13}(\theta_2)$ ——— $P_{0123}(\theta_4)$ ——— $P_{0143}(\theta_6)$

2 — $G_{02}(\theta_0)$ ——— $P_{0123}(\theta_4)$ $P_{0125}(\theta_5)$ ——— ⟲ x

1 — $G_{13}(\theta_2)$ $G_{15}(\theta_3)$ $P_{0123}(\theta_4)$ $P_{0125}(\theta_5)$ $P_{0143}(\theta_6)$ $P_{0145}(\theta_7)$

0 — $G_{02}(\theta_0)$ $G_{04}(\theta_1)$ $P_{0123}(\theta_4)$ $P_{0125}(\theta_5)$ $P_{0143}(\theta_6)$ $P_{0145}(\theta_7)$ ⟲ x

FIG. 18

92 Ansatz CIRCUIT

QUBIT NUMBER

5 ——— $G_{15}(\theta_3')$ $P_{0125}(\theta_5)$ ——— $P_{0145}(\theta_7)$

4 ——— $G_{04}(\theta_1)$ ——— $P_{0143}(\theta_6)$ $P_{0145}(\theta_7)$

3 — $G_{13}(\theta_2)$ ——— $P_{0123}(\theta_4')$ ——— $P_{0143}(\theta_6)$ ———

2 — $G_{02}(\theta_0)$ ——— $P_{0123}(\theta_4')$ ——— $P_{0125}(\theta_5)$ ——— ⟲ x

1 — $G_{13}(\theta_2)$ ——— $P_{0123}(\theta_4')$ $G_{15}(\theta_3')$ $P_{0125}(\theta_5)$ $P_{0143}(\theta_6)$ $P_{0145}(\theta_7)$

0 — $G_{02}(\theta_0)$ $G_{04}(\theta_1)$ $P_{0123}(\theta_4')$ ——— $P_{0125}(\theta_5)$ $P_{0143}(\theta_6)$ $P_{0145}(\theta_7)$ ⟲ x

[PROPOSED METHOD]
GATE ELEMENT DELETION, PARAMETER UPDATE
QUBIT NUMBER

93 Ansatz CIRCUIT

5 ──────────────── $P_{0125}(\theta_5')$ ──── $P_{0145}(\theta_7')$ $G_{15}(\theta_3'')$

4 ──── $G_{04}(\theta_1)$ ──────── $P_{0143}(\theta_6')$ $P_{0145}(\theta_7')$ ────

3 ── $G_{13}(\theta_2)$ ── $P_{0123}(\theta_4')$ ──── $P_{0143}(\theta_6')$ ────

2 ── $G_{02}(\theta_0)$ ── $P_{0123}(\theta_4')$ $P_{0125}(\theta_5')$ ──────── ⌢ x

1 ── $G_{13}(\theta_2)$ ── $P_{0123}(\theta_4')$ $P_{0125}(\theta_5')$ $P_{0143}(\theta_6')$ $P_{0145}(\theta_7')$ $G_{15}(\theta_3'')$

0 ── $G_{02}(\theta_0)$ $G_{04}(\theta_1)$ $P_{0123}(\theta_4')$ $P_{0125}(\theta_5')$ $P_{0143}(\theta_6')$ $P_{0145}(\theta_7')$ ⌢ x

FIG. 19

QUBIT NUMBER

94 Ansatz CIRCUIT

5 ──────────────── $P_{0125}(\theta_5')$ ──── $P_{0145}(\theta_7')$ ╳

4 ──── $G_{04}(\theta_1)$ ──────── $P_{0143}(\theta_6')$ $P_{0145}(\theta_7')$ ────

3 ── $G_{13}(\theta_2)$ ── $P_{0123}(\theta_4')$ ──── $P_{0143}(\theta_6')$ ────

2 ── $G_{02}(\theta_0)$ ── $P_{0123}(\theta_4')$ $P_{0125}(\theta_5')$ ──────── ⌢ x

1 ── $G_{13}(\theta_2)$ ── $P_{0123}(\theta_4')$ $P_{0125}(\theta_5')$ $P_{0143}(\theta_6')$ $P_{0145}(\theta_7')$ ╳

0 ── $G_{02}(\theta_0)$ $G_{04}(\theta_1)$ $P_{0123}(\theta_4')$ $P_{0125}(\theta_5')$ $P_{0143}(\theta_6')$ $P_{0145}(\theta_7')$ ⌢ x

[PROPOSED METHOD]
GATE ELEMENT DELETION, PARAMETER UPDATE

QUBIT NUMBER

95 Ansatz
CIRCUIT

5 ——————————————— $P_{0125}(\theta_5'')$ ——— $P_{0145}(\theta_7'')$ ———

4 ——— $G_{04}(\theta_1)$ ——————— $P_{0143}(\theta_6'')$ — $P_{0145}(\theta_7'')$ ———

3 ——————— $P_{0123}(\theta_4'')$ ——— $P_{0143}(\theta_6'')$ — ✗ — 🗘 x

2 — $G_{02}(\theta_0)$ ——— $P_{0123}(\theta_4'')$ — $P_{0125}(\theta_5'')$ ————————— 🗘 x

1 ——————— $P_{0123}(\theta_4'')$ — $P_{0125}(\theta_5'')$ — $P_{0143}(\theta_6'')$ — $P_{0145}(\theta_7'')$ — ✗

0 — $G_{02}(\theta_0)$ — $G_{04}(\theta_1)$ — $P_{0123}(\theta_4'')$ — $P_{0125}(\theta_5'')$ — $P_{0143}(\theta_6'')$ — $P_{0145}(\theta_7'')$ ———

FIG. 20

[PROPOSED METHOD]
GATE ELEMENT DELETION, PARAMETER UPDATE

QUBIT NUMBER

95 Ansatz
CIRCUIT

| PARAMETER | VALUE IN GROUND STATE |
|-----------|----------------------|
| $\theta_4$ | −0.03653909 |
| $\theta_5$ | 0.06096214 |
| $\theta_6$ | −0.06084046 |
| $\theta_7$ | −0.11657265 |

| PARAMETER | VALUE IN GROUND STATE |
|-----------|----------------------|
| $\theta_4''$ | −0.036515399 |
| $\theta_5''$ | 0.060922579 |
| $\theta_6''$ | −0.060800974 |
| $\theta_7''$ | −0.116496734 |

CALCULATION RESULT

$\langle \psi(\theta) | X_0 X_2 | \psi(\theta) \rangle = -0.06912235$

FIG. 21

[PARAMETER-FIXED EXAMPLE]
GATE ELEMENT DELETION, NO PARAMETER UPDATE

96 Ansatz CIRCUIT

QUBIT NUMBER

FIG. 22

CALCULATION RESULT

$\langle \psi(\theta)|X_0X_2|\psi(\theta)\rangle = -0.06718203$

| | CALCULATION RESULT $\langle X_0 X_2 \rangle$ | DIFFERENCE FROM BEST VALUE | THE NUMBER OF GATE ELEMENTS |
|---|---|---|---|
| COMPARATIVE EXAMPLE | −0.06912263 | − | 8(G:4,P:4) |
| PROPOSED METHOD | −0.06912235 | 0.00000028 | 6(G:2,P:4) |
| PARAMETER-FIXED EXAMPLE | −0.06718203 | 0.00194060 | 6(G:2,P:4) |

FIG. 23

## INTERNATIONAL SEARCH REPORT

International application No.

**PCT/JP2022/043233**

| A. | CLASSIFICATION OF SUBJECT MATTER |
|---|---|

*G06N 10/00*(2022.01)i
FI: G06N10/00

According to International Patent Classification (IPC) or to both national classification and IPC

| B. | FIELDS SEARCHED |
|---|---|

Minimum documentation searched (classification system followed by classification symbols)

G06N10/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | entire text, all drawings | 1-10 |
| A | US 2021/0264309 A1 (IONQ, INC.) 26 August 2021 (2021-08-26) entire text, all drawings | 1-10 |
| A | JP 2022-521143 A (IONQ INC.) 06 April 2022 (2022-04-06) entire text, all drawings | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 February 2023** | **14 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/043233**

| Patent document cited in search report | | | Publication date (day/month/year) | Patent family member(s) | | | Publication date (day/month/year) |
|---|---|---|---|---|---|---|---|
| US | 2021/0264309 | A1 | 26 August 2021 | CN | 115244549 | A | |
| JP | 2022-521143 | A | 06 April 2022 | US | 2020/0272926 | A1 | |
| | | | | CN | 113614728 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021068281 A
- WO 2022107298 A
- US 20190018912
- US 20200192993

### Non-patent literature cited in the description

- Acceleration of High-Precision VQE Calculations Using Quantum Chemical Calculations on Classical Computers. **MIKIO MORITA** ; **NORIHIKO TAKAHASHI** ; **HIROTAKA OSHIMA** ; **SHINTARO SATO**. Quantum Software (QS). Information Processing Society of Japan, 17 March 2022, vol. 2022-QS-5, 1-8